# EUROPEAN PATENT APPLICATION

(11) **EP 1 437 737 A2**
(43) Date of publication of application: **14.07.2004**
(21) Application number: 04250020.7
(22) Date of filing: 05.01.2004
(51) Int. Cl.: G11B 27/00

(54) **Information recording medium, information reproducing apparatus and method, and computer program**

(30) Priority: 07.01.2003 JP 2003001542
(71) Applicant: Pioneer Corporation, Meguro-ku, Tokyo (JP); Kabushiki Kaisha Toshiba, Tokyo (JP)
(72) Inventor: Sawabe, Takao, c/o Pioneer Corporation, Tokorozawa-shi, Saitama (JP); Koda, Takeshi, c/o Pioneer Corporation, Tokorozawa-shi, Saitama (JP); Imamura, Akira, c/o Pioneer Corporation, Tokorozawa-shi, Saitama (JP); Mimura, Hideki, c/o Intellectual Property Division, Minato-ku, Tokyo (JP); Taira, Kazuhiko, c/o Intellectual Property Div., Minato-ku, Tokyo (JP)
(74) Representative: Haley, Stephen

(57) **Abstract**

On an information recording medium (100), there are recorded: one or a plurality of first entity information (VTS), which is compressed and encoded by a first compressing and encoding method, for individually constituting Titles; first management information (VMG) for managing and controlling the first entity information; one or a plurality of second entity information (VTS2), which is compressed and encoded by a second compressing and encoding method, for individually constituting Titles; second management information (VMG2) for managing and controlling the first and second entity information; entity information for a first menu (VMGM2_VOBS), which is compressed and encoded by the first or second compressing and encoding method, for constituting the first menu related to the first and second entity information; and first attribute information (VOB_VERN_FLG) for indicating the compressing and encoding method of the entity information for the first menu.

## Description

The present invention relates to: an information recording medium, such as a DVD; an information reproducing apparatus, such as a DVD player; an information reproducing method; and a computer program for making a computer function as the information reproducing apparatus.

Conventionally, on a "DVD-Video disc", which is an optical disc based on the DVD-Video standard, there are recorded video information compressed and encoded by Moving Picture Expert Group (MPEG) 1 or MPEG 2, each of which is one example of a compressing and encoding method. According to the DVD Video disc, it has made progress in the compressing and encoding of record data and in its high-density recording, enough to record contents information with an about one movie volume on one disc. On this type of DVD, usually, video information is recorded in accordance with a Standard Definition (SD) standard.

On the other hand, a 'DVD-Audio disc", which is a disc based on the DVD-Audio standard, is also commercialized. A DVD compatible player, which can reproduce both this "DVD-Audio disc" and the above-described "DVD-Video disc", is also developed.

Even for a player compatible with the DVD-Audio disc, for example, there is a technique capable of reproducing only audio information, which is disclosed in Japanese Patent Application Laying Open NO. Hei 11-164243 and Japanese Patent Application Laying Open NO. 2000-285648. Moreover, there is a technique of using a compatible player to effectively reproduce video information and audio information recorded on a DVD with video zones and audio zones, which is disclosed in Japanese Patent Application Laying Open NO. Hei 11-265563 and Japanese Patent Application Laying Open NO. 2000-293950, for example.

Even to this type of information recording medium, there is a general request for progressing from the recording of only the contents information based on the SD standard, to the recording of the contents information based on a High Definition (HD) standard, which has been already practically used, i.e. so-called-"High Vision" contents information.

In order to respond such a request, it is firstly conceivable to develop a DVD for a blue laser, which allows high-density recording, and further to develop a DVD player which uses the blue laser and which can reproduce this DVD. However, there are still many technical or economical problems now in order to put the DVD and the DVD player into practical use.

On the other hand, in order to respond such a request, it is also conceivable (i) to employ a compressing and encoding method with higher efficiency than that of MPEG 1 or MPEG 2 which are currently used, such as MPEG 4 part 10 coding (which is simply referred to as "MPEG 4" hereinafter, as occasion demands), (ii) to record, e.g., the High Vision contents information on an existing DVD for a red laser, and (iii) to reproduce this recorded information with a DVD player which uses the red laser.

However, the following problem occurs even if about two-hour High Vision contents information can be recorded on one DVD by the highly efficient compressing and encoding, such as MPEG 4. Namely, the problem is that some DVD players, which are already spread worldwide, cannot reproduce the contents information compressed and encoded at high efficiency by e.g. MPEG 4, More specifically, there is a technical problem that even if there are DVDs on which the High Vision contents information are recorded, these DVDs cannot be reproduced by some conventional DVD players without a decoder compatible with MPEG 4. To put it the other way, if the DVDs which cannot be reproduced by the already spread DVD players are sold along with DVDs which can be reproduced by the already spread DVD players, this is wasteful and causes confusion in the market. This also has hardly any hope for commercial success.

In addition, menu information for displaying a menu screen to select audio, subtitles, Titles, or the like is recorded on DVDs. The manufacturing of it takes much trouble and time, Therefore, when discs which use the above-described highly efficient compressing and encoding method, such as MPEG 4, are made aside from discs which use the above-described compressing and encoding method, such the MPEG 1 or MPEG 2, there are generated such a technical problem that newly making menu information for the former discs places an enormous burden on the side of contents makers or authors.

It is therefore an object of the present invention to provide: an information recording medium which can be reproduced even by an information reproducing apparatus for the conventional compressing and encoding method, such as MPEG 1 and MPEG 2, and which can be also reproduced even by an information reproducing apparatus for the advanced highly efficient compressing and encoding method, such as MPEG 4, as well as which can decrease processing burdens related to the making of the menu screen; an information recording apparatus and method which enable the information recording medium to be reproduced; and a computer program for making a computer function as such an information reproducing apparatus.

The above object of the present invention can be achieved by a first information recording medium on which there are recorded: one or a plurality of first entity information, which is compressed and encoded by a first compressing and encoding method, for individually constituting Titles, each of which is a logical combination of contents including at least video; first management information for managing and controlling the first entity information; one or a plurality of second entity information, which is compressed and encoded by a second compressing and encoding method, which is different from the first compressing and encoding method, for individually constituting Titles, each of which is a logical combination of contents same as or different from the contents of the first entity information; second management information for managing and controlling the first and second entity information; entity information for a first menu, which is compressed and encoded by the first or second compressing and encoding method, for constituting the first menu related to the first and second entity information; and first attribute information for indicating the first or second compressing and encoding method of compressing and encoding the entity information for the first menu.

According to the first information recording medium of the present invention, the first entity information, e.g. VTS_VOB (VTS#1, VTS#2, ..., VTS#n) described later, is compressed and encoded by the first compressing and encoding method, e.g, MPEG 2 or MPEG 1, and individually constitutes the Titles. Here, the "Title" is a logically combined unit, such as one movie, one drama, one sports program, and one game. The "Title" includes contents of both video (i.e., picture) and audio (i.e., sound) or contents of video only. Namely, the first entity information is the SD standard video information, which is recorded on a traditional DVD, or the like, for example. On the other hand, the second entity information, e.g. VTS2_VOB (VTS2#1, VTS2#2, ..., VTS2#m) described later, is compressed and encoded by the second compressing and encoding method, e.g. MPEG 4, which is different from the first compressing and encoding method, and individually constitutes the Titles. Namely, the second entity information is the HD standard or High Vision video information, which is not recorded on the traditional DVD, or the like, for example. In this case, the Title constructed by the second entity information and the Title constructed by the first entity information may include the same contents, such as the same movie but having different standards and picture quality. Alternatively, they may include contents mutually having some type of relations, such as a digest version and a special version. They may further include non-identical contents, such as a movie having completely different contents.

When a menu is displayed upon reproducing the first information recording medium of the present invention, firstly, it is detected quickly and surely whether the compressing and encoding method of the entity information for the first menu, i.e. VMGM2_VOBS described later, is the first compressing and encoding method or the second compressing and encoding method by referring to the first attribute information. If it is judged by the first attribute information that the entity information for the first menu is the first compressing and encoding method, i.e. MPEG 1 or 2 or the like, a MPEG 1 decoder or a MPEG 2 decoder is used to decode the entity information for the first menu, for example. By reproducing the entity information for the first menu eventually decoded, it is possible to display and output the menu screen, On the other hand, if it is judged by the first attribute information that the entity information for the first menu is the second compressing and encoding method, i.e. MPEG 4 or the like, a MPEG 4 decoder is used to decode the entity information for the first menu, for example. By reproducing the entity information for the first menu eventually decoded, it is possible to display and output the menu screen. Therefore, in any case, an information reproducing apparatus, such as a DVD player, having two switchable decoders corresponding to the first and second compressing and encoding methods can appropriately reproduce the information recording medium of the present invention. Then, the menu is appropriately displayed. Particularly if the entity information for a menu is already constructed by using the compressing and encoding method of MPEG 1 or 2, for example, the recording of this information as the entity information for the first menu allows the menu display using the entity information for the first menu. In other words, it allows the diversion of the existing information for a menu, even if the compressing and encoding method of the Title is MPEG 4 upon reproduction, for example. Namely, contents makers do not have to newly make this menu in accordance with MPEG 4 or the like, which is extremely useful in practice for the contents makers.

As described above, according to the first information recording medium of the present invention, if there is the entity information for the first menu made by the first compressing and encoding method, such as MPEG 1 or 2, as the entity information for a menu already made, this entity information for the first menu can be used for the information recording medium of the present invention. Then, while a decoder for menu reproduction and a decoder for Title reproduction or the like are switched as occasion demands, a user can watch and listen to the menu and the corresponding Title without being aware of it.

In addition, the entity information for a menu has a relatively much less data amount compared to that of the Title. Thus, even if the existing entity information for a menu of the Title, which is made by the encoding method with lower compressibility, is diverted without change, the data amount on the information recording medium is hardly wasted in practice. Therefore, the structure as in the present invention is extremely useful from a comprehensive viewpoint

In one aspect of the first information recording medium, the first compressing and encoding method has lower compressibility than that of the second compressing and encoding method, and the entity information for the first menu is compressed and encoded by the first compressing and encoding method.

According to this aspect, it is possible to display the menu screen by using the existing entity information for the first menu based on the first compressing and encoding method prepared for DVDs. Namely, if the existing entity information for the first menu is already constructed, it can be diverted.

In addition, the entity information for the first menu has a relatively much less data amount compared to that of the Title. Thus, even if the existing entity information for the first menu, which is made by the first compressing and encoding method with lower compressibility, is used without change, the data amount is not wasted in practice.

The above object of the present invention can be achieved by a second information recording medium on which there are recorded: one or a plurality of second entity information, which is compressed and encoded by a second compressing and encoding method, which is different from a first compressing and encoding method, for individually constituting Titles, each of which is a logical combination of contents same as or different from the contents of a first entity information, in addition to or in place of one or a plurality of the first entity information, which is compressed and encoded by the first compressing and encoding method, for individually constituting Titles, each of which is a logical combination of contents including at least video; second management information for managing and controlling at least the second entity information out of the first and second entity information, in addition to or in place of first management information for managing and controlling the first entity information; entity information for a first menu, which is compressed and encoded by the first compressing and encoding method, for constituting the first menu related to at least the second entity information out of the first and second entity information; and first attribute information for indicating the first compressing and encoding method as a compressing and encoding method of compressing and encoding the entity information for the first menu, wherein the first compressing and encoding method has lower compressibility than that of the second compressing and encoding method.

According to the second information recording medium of the present invention, the second entity information, e.g. the VTS2_VOB (VTS2#1, ..., VTS2#m) described later, is recorded therein. The second entity information is compressed and encoded by the second compressing and encoding method, e.g. MPEG 4, and individually constitutes the Titles. In addition, the first entity information, e.g. the VTS_VOB (VTS#1, ..., VTS#n) described later, compressed and encoded by the first compressing and encoding method, e.g. MPEG 2 or MPEG 1, may be recorded or may not be recorded.

Particularly in thisinvention, the entity information for the first menu, e.g. the VMGM2_VOBS described later, is compressed and encoded by the first compressing and encoding method. Namely, it is possible to use the entity information for the first menu based on the first compressing and encoding method which has simpler encoding and decoding processes than those of the second compressing and encoding method, such as MPEG 4. Therefore, even when the Title is constructed from the second entity information compressed and encoded by the second compressing and encoding method, if the entity information for the first menu made by the existing first compressing and encoding method is already constructed, this information can be diverted to display and output the menu screen. Namely, it is not necessary to newly make the entity information for a menu compressed and encoded by the second compressing and encoding method, which is extremely useful in practice for the contents makers.

As described above, according to the second information recording medium of the present invention, if there is the entity information for the first menu made by the first compressing and encoding method, such as MPEG 1 or 2, as the entity information for a menu already made, this entity information for the first menu can be used for the information recording medium of the present invention. Then, while a decoder for menu reproduction and a decoder for Title reproduction or the like are switched as occasion demands, a user can watch and listen to the menu based on the first compressing and encoding method and the corresponding Title based on the first or second compressing and encoding method without being aware of it.

In addition, the entity information for a menu has a relatively much less data amount compared to that of the Title. Thus, even if the existing entity information for a menu of the Title, which is made by the encoding method with lower compressibility, is diverted without change, the data amount on the information recording medium is hardly wasted in practice. Therefore, the structure as in the present invention is extremely useful from a comprehensive viewpoint

In another aspect of the first or second information recording medium of the present invention, the second management information has first entire logical information about whole of the second management information, and the first attribute information comprises n-bit flag information (n: natural number, n≧1) recorded in management information for accessing Program Chain Information which defines a Program Chain which is a logical division made by combining a plurality of Cells constituting the entity information for the first menu, the management information being included in the first entire logical information,.

According to this aspect, the first attribute information is recorded as the predetermined-bit flag information in the management information (e.g. VMGM2_PGCI_SRP (VMGM2_PGCI_SRP#1, ..., VMGM2_PGCI_SRP#q) described later) for accessing the Program Chain Information for indicating the logical division of a plurality of Cells, which are information units constituting the entity information for the first menu, the management information being included in the first entire logical information, e.g. VMG2I described later.

This makes it possible to refer to the first attribute information, as occasion demands, by using the entity information for the first menu in the process of displaying and outputting the first menu.

In particular, according to this aspect, an information reproducing apparatus can judge the compressing and encoding method of the entity information for the first menu in accordance with the flag information, by referring to the management information, such as the VMGM2_PGCI_SRP, in the second management information as being an upper layer before referring to the entity information for the first menu, such as VOBU, as being a lower layer.

Incidentally, the management information, such as the VMGM2_PGCI_SRP, in the second management information may be preferably recorded in a lead-in area or the like. The information reproducing apparatus may reproduce the management information one by one or all at one time before the reproduction of the first or second entity information and keep it in its built-in memory or the like until the end of reproduction. This makes it possible to immediately refer to the attribute information in a form of a table, a list, of the like on the built-in memory upon subsequent reproduction of the entity information for the first menu.

This aspect is effective when it is not allowed to mix the compressing and encoding methods of a plurality of VOBU in the same PGC, for example. Namely, this aspect is inapplicable when a plurality of attribute information in the same PGC is allowed.

In another aspect of the first or second information recording medium of the present invention, the second management information has first entire logical information about whole of the second management information, and the first attribute information comprises n-bit flag information (n: natural number, n ≧ 1) recorded in one or a plurality of Cell information about a plurality of Cells constituting the entity information for the first menu, the Cell information being included in the first entire logical information,.

According to this aspect, the first attribute information is recorded as the predetermined-bit flag information in the Cell information (e.g. VMGM2_CPI (VMGM2_CPI#1, ..., VMGM2_CPI#r) described later) including information about a plurality of Cells, which are information units constituting the entity information for the first menu, the Cell information being included in the first entire logical information, e.g. the VMG21 described later.

This makes it possible to refer to the first attribute information, as occasion demands, by using the entity information for the first menu in the process of displaying and outputting the first menu.

In particular, according to this aspect, an information reproducing apparatus can judge the compressing and encoding method of the entity information for the first menu in accordance with the flag information, by referring to the Cell information, such as the VMGM2_CPI, included in the first entire logical information upon referring to the first entire logical information as being an upper layer before referring to the entity information for the first menu as being a lower layer, such as the VOBU.

In another aspect of the first or second information recording medium of the present invention, on which there are recorded: entity information for a second menu, which is compressed and encoded by the first or second compressing and encoding method, for constituting the second menu related to the second entity information; and second attribute information for indicating the first or second compressing and encoding method of compressing and encoding the entity information for the second menu.

According to this aspect, it is possible to display and output, as occasion demands, the second menu constituting a Title menu which is set for each Title included in the first or second entity information in addition to the display of the first menu constituting a disc menu about a disc as a whole, such as a DVD. Specifically, firstly, it is detected quickly and surely whether the compressing and encoding method of the entity information for the second menu, i.e. VTSM2_VOB described later, is the first compressing and encoding method or the second compressing and encoding method by referring to the second attribute information. In the same manner as that in the reproduction of the entity information for the first menu, the entity information for the second menu is decoded by a decoder corresponding to the compressing and encoding method of compressing and encoding the entity information for the second menu. By reproducing the decoded entity information for the second menu, it is possible to display and output the menu screen set for each Title.

Therefore, it is possible to display and output the second menu appropriately, as with the display of the first menu. Particularly if the existing entity information for the second menu based on the compressing and encoding method of MPEG 1 or 2 is already constructed, this information can be recorded as the entity information for the second menu. Therefore, this recording allows the menu display using the entity information for the first menu. In other words, it allows the diversion of the existing information for a menu, by switching a decoder for menu reproduction and a decoder for Title reproduction, as occasion demands, even if the compressing and encoding method of the Title is MPEG 4 upon the reproduction, for example. Namely, contents makers do not have to newly make this menu in accordance with MPEG 4 or the like, which is extremely useful in practice for the contents makers.

This makes it possible to divert the existing menu information of the Title not only to the entity information for a menu about a disc as a whole, such as a DVD, but also to the entity information for a menu which is set for each Title, for example. Namely, it is more useful in practice in making the contents.

In another aspect of the first or second information recording medium of the present invention, the second entity information has second entire logical information about whole of the second entity information, and the second attribute information comprises n-bit flag information (n: natural number, n ≧ 1) recorded in management information for accessing Program Chain Information which defines a Program Chain which is a logical division made by combining a plurality of Cells constituting the entity information for the second menu, the management information being included in the second entire logical information.

According to this aspect, the second attribute information is recorded as the predetermined-bit flag information in the management information (e.g. VTSM2_PGCI_SRP (VTSM2_PGCT_SRP#1, ..., VTSM2_PGCI_SRP#u) described later) for accessing the Program Chain Information for indicating the logical division of a plurality of Cells, which are information units constituting the entity information for the second menu, the management information being included in the second entire logical information, e.g. VTS21 described later.

This makes it possible to refer to the second attribute information, as occasion demands, by using the entity information for the second menu in the process of displaying and outputting the second menu.

In particular, according to this aspect, an information reproducing apparatus can judge the compressing and encoding method of the entity information for the second menu in accordance with the flag information, by referring to the management information, such as the VTSM2_PGCI_SRP, in the second entity information as being an upper layer before referring to contents information (e.g. video information, audio information, sub-picture information, or the like) out of the entity information for the second menu, such as the VOBU, as being a lower layer. This aspect is effective when it is not allowed to mix the compressing and encoding methods of a plurality of VOBU in the same PGC, for example. Namely, this aspect is inapplicable when a plurality of attribute information in the same PGC is allowed.

In another aspect of the first or second information recording medium of the present invention, the second entity information has second entire logical information about whole of the second entity information, and the second attribute information comprises n-bit flag information (n: natural number, n ≧ 1) recorded in one or a plurality of Cell information about a plurality of Cells constituting the entity information for the second menu, the Cell information being included in the second entire logical information.

According to this aspect, the second attribute information is recorded as the predetermined-bit flag information in the Cell information (e.g. VTSM2_CPI (VTSM2_CPI#1, ..., VTSM2_CPI#x) described later) including information about a plurality of Cells, which are information units constituting the entity information for the second menu, the Cell information being included in the second entire logical information, e.g. the VTS21 described later.

This makes it possible to refer to the second attribute information, as occasion demands, by using the entity information for the second menu in the process of displaying and outputting the second menu.

In particular, according to this aspect, an information reproducing apparatus can judge the compressing and encoding method of the entity information for the second menu in accordance with the flag information, by referring to the Cell information, such as the VTSM2_CPI, in the second entity information as being an upper layer before referring to the contents information out of the entity information for the second menu, such as the VOBU, as being a lower layer.

The above object of the present invention can be achieved by a third information recording medium on which there are recorded: one or a plurality of first entity information, which is compressed and encoded by a first compressing and encoding method, for individually constituting Titles, each of which is a logical combination of contents including at least video; first management information for managing and controlling the first entity information; one or a plurality of second entity information, in which (i) a first portion comprising one or a plurality of unit information compressed and encoded by a second compressing and encoding method different from the first compressing and encoding method and (ii) a second portion comprising one or a plurality of unit information compressed and encoded by the first compressing and encoding method are mixed, for individually constituting Titles, each of which is a logical combination of contents same as or different from the contents of the first entity information; second management information for managing and controlling the first and second entity information; entity information for a first menu, which is compressed and encoded by the first or second compressing and encoding method, for constituting a first menu related to the first and second entity information; first attribute information for indicating the first or second compressing and encoding method of compressing and encoding the entity information for the first menu; and third attribute information for indicating the first or second compressing and encoding method of compressing and encoding the second entity information for each of the first and second portions.

When a menu is displayed upon reproducing the third information recording medium of the present invention, it is possible to reproduce the entity information for the first menu, as occasion demands, on the basis of the first attribute information as in the first or second information reproducing medium of the present invention.

Particularly in this embodiment, the second entity information is recorded including (i) the first portion compressed and encoded by the second compressing and encoding method, such as MPEG 4, and (ii) the second portion compressed and encoded by the first compressing and encoding method, such as MPEG 1 or 2. Then, the third attribute information for indicating the compressing and encoding method of compressing and encoding each of the first and second portions is recorded. Therefore, upon reproducing the contents included in the second entity information, it is possible to select and reproduce only the first portion compressed and encoded by the second compressing and encoding method by referring to the third attribute information. On the other hand, it is also possible to select and reproduce only the second portion compressed and encoded by the first compressing and encoding method.

The first or second portion uses, as its unit information, the VOBU or a data group constructed from a plurality of VOBU, which is described later. The compressing and encoding method of the VOBU is common in the unit. Therefore, it is also possible to set the third attribute information for each reproduction processing unit, such as a PGC unit described later, including a plurality of unit information. Then, it is possible to reproduce and output the portions, as occasion demands, on the basis of the third attribute information for each reproduction processing unit. Alternatively, it is also possible to set the third attribute information for each unit information (i.e. the VOBU described later) and to reproduce and output the portions, as occasion demands, on the basis of the third attribute information for each unit information.

This makes it possible to select only the unit information whose compressing and encoding method is identical, and to reproduce and output a predetermined Title or the like appropriately on the basis of the third attribute information, even in the entity information including one or a plurality of unit information compressed and encoded by the different compressing and encoding methods;

In another aspect of the third information recording medium of the present invention, the second entity information has second entire logical information about whole of the second entity information, and the third attribute information comprises n-bit flag information (n: natural number, n ≧ 1) recorded in management information for accessing Program Chain Information which defines a Program Chain which is a logical division made by combining a plurality of Cells constituting the second entity information, the management information being included in the second entire logical information.

According to this aspect, the third attribute information is recorded as the predetermined-bit flag information in the management information (e.g. VTS2_PGCI_SRP (VTS2_PGCI_SRP#1, ..., VTS2_PGCI_SRP#w) described later) for accessing the Program Chain Information for indicating the logical division of a plurality of Cells, which are information units constituting the second entity information, the management information being included in the second entire logical information, e.g. the VTS2I described later.

This makes it possible to refer to the third attribute information, as occasion demands, by using the second entity information in the process of reproducing and outputting a predetermined Title or the like.

In particular, according to this aspect, an information reproducing apparatus can judge the compressing and encoding method of the second entity information in accordance with the flag information, by referring to the management information, such as the VTS2_PGCI_SRP, in the second entity information as being an upper layer before referring to the contents information out of the second entity information, such as the VOBU, as being a lower layer.

This aspect is effective when it is not allowed to mix the compressing and encoding methods of a plurality of VOBU in the same PGC, for example. Namely, this aspect is inapplicable when a plurality of attribute information in the same PGC is allowed.

In another aspect of the third information recording medium of the present invention, the second entity information has second entire logical information about whole of the second entity information, and the third attribute information comprises n-bit flag information (n: natural number, n≧ 1) recorded in one or a plurality of Cell information about a plurality of Cells constituting the second entity information, the Cell information being included in the second entire logical information,.

According to this aspect, the third attribute information is recorded as the predetermined-bit flag information in the Cell information (e.g. VTS2_CPI (VTS2_CPI#1, ..., VTS2_CPI#y) described later) including information about a plurality of Cells, which are information units constituting the second entity information, the Cell information being included in the second entire logical information, e.g. the VTS2I described later.

This makes it possible to refer to the third attribute information, as occasion demands, by using the second entity information in the process of reproducing and outputting a predetermined Title or the like.

In particular, according to this aspect, an information reproducing apparatus can judge the compressing and encoding method of the second entity information in accordance with the flag information, by referring to the Cell information, such as the VTS2_CPI, in the second entity information as being an upper layer before referring to the contents information out of the second entity information, such as the VOBU, as being a lower layer.

In another aspect of the third information recording medium of the present invention, the second management information has first entire logical information about whole of the second management information, and the third attribute information comprises n-bit flag information (n: natural number, n≧ 1) recorded in a management information table for accessing each of the Titles managed by the second management information, the management information table being included in the first entire logical information.

According to this aspect, the third attribute information is recorded as the predetermined-bit flag information in the management information table (e.g. TT_SRPT2 described later) for accessing each of the predetermined Titles managed by the second management information, the management information table being included in the first entire logical information.

This makes it possible to refer to the third attribute information, as occasion demands, in the process of reproducing and outputting a predetermined Title.

In particular, according to this aspect, an information reproducing apparatus can judge the compressing and encoding method of the second entity information in accordance with the flag information, by referring to the management information table, such as the TT_SRPT2, in the second management information as being an upper layer before referring to the second entity information, such as the VOBU, as being a lower layer.

Incidentally, the management information table, such as the TT_SRPT2, in the second management information may be preferably recorded in a lead-in area or the like. The information reproducing apparatus may reproduce all of the management information table one by one or all at one time before the reproduction of the second entity information and keep it in its built-in memory or the like until the end of reproduction. This makes it possible to immediately refer to the management information table on the built-in memory upon subsequent reproduction of the second entity information.

This aspect is effective when it is not allowed to mix the compressing and encoding methods of a plurality of VOBU in the same PGC, for example. Namely, this aspect is inapplicable when a plurality of attribute information in the same PGC is allowed.

In another aspect of the first, second or third information recording medium of the present invention, at least one of the first, second, and third attribute information comprises n-bit flag information (n: natural number, n ≧ 1) recorded in an empty area in the recording area of the entity information for the first menu, the entity information for the second menu, or the second entity information, respectively.

According to this aspect, by virtue of the 1-bit or a-plurality-of-bit flag information, at least one of the first, second, and third attribute information can be recorded in the entity information for the first menu, e.g. the VMGM2_VOBS described later, the entity information for the second menu, e.g. the VTSM2_VOB described later, or the second entity information, e.g. the VTS2_VOB (VTS2#1, ..., VTS2#m), respectively, For example, a 1-bit or small bit empty area certainly exists in the entity information with respect to the existing MPEG 1 or 2 or MPEG 4, which is advantageous to write the flag information as in this embodiment. Namely, it is possible to write the flag information without any necessity to apply a change or expansion to the existing format and data structure. Therefore, it is possible to obtain the various benefits owned by the above-described present invention. As a result, an information reproducing apparatus, such as a DVD player, can switch the decoders as occasion demands by reading the flag information recorded in the empty area upon reproducing the menu or the Title, Therefore, it is possible to appropriately display and output the menu or to reproduce the Title.

Incidentally, at least one of the first, second, and third attribute information may be the predetermined-bit flag information recorded in the empty area in the recording area of the first management information, e.g. VMG described later, or the second management information, e.g. VMG2 described later.

The entity information for the first menu, the entity information for the second menu, or the second entity information described in the above aspect is packed to be an physically accessible information unit and has a Navi Pack made by packing navigation information for reproducing and controlling the packed information unit, and at least one of the first, second, and third attribute information comprises n-bit flag information (n: natural number, n ≧ 1) recorded in control information for data searching, which is placed in the Navi Pack.

According to this aspect, the entity information for the first menu, e.g. the VMGM2_VOBS described later, the entity information for the second menu, e.g. the VTSM2_VOB, or the second entity information, e.g. the VTS2_VOB (VTS2#1, ..., VTS2#m), includes the information unit packed so that an information reproducing apparatus, such as a DVD player, can physically access it (e.g. Video Pack, Audio Pack, or Sub-picture Pack described later, or the like). The entity information for the first menu, the entity information for the second menu, or the second entity information also includes the Navi Pack (e.g. NV_PCK described later) for reproducing and controlling the packed information unit. The Navi Pack includes control information for data searching (e.g. DSI described later) for searching for the Video Pack desired to reproduce or the like. At least one of the first, second, and third attribute information is recorded as the predetermined-bit flag information in the empty area, e.g. VOBU_ADP_ID described later, in the control information.

Thus, upon reproducing the Title or displaying and outputting the menu, an information reproducing apparatus, such as a DVD player, can refer to the first, second, or third attribute information by accessing the Navi Pack before reproducing and outputting the entity information for the first menu, the entity information for the second menu, or the second entity information. Therefore, upon reproducing the Title or displaying and outputting the menu, the information reproducing apparatus can switch the decoders or the like, as occasion demands. Consequently, it can appropriately display and output the menu or reproduce the Title.

As described above, according to the embodiment, it is possible to obtain the attribute information related to the entity information desired to reproduce, without referring to the management information related to the entity information desired to reproduce, even when the entity information is directly accessed, e.g. in directly reading the VOBU in a Personal Computer (PC) environment; in special reproduction, such as time searching and chapter searching, fast-forwarding, rewinding, and conditional branch; or the like. For example, one DSI is included in the VOBU, so that it can be used as an identifier upon the reproduction. Moreover, the flag information written in the control information, such as the DSI, is related to the first or second entity information desired to reproduce. Therefore, it is possible to judge the compressing and encoding method in real-time by using this flag information.

### (Embodiments of Information Reproducing Apparatus)

The above object of the present invention can be achieved by a first information reproducing apparatus for reproducing the above-described first or second information recording medium provided with: the first entity information; the first management information; the second entity information; the second management information; the entity information for the first menu; and the first attribute information (including its various aspects), the first apparatus provided with: a reading device for reading out information from the information recording medium; a judgment device for judging whether the entity information for the first menu is compressed and encoded by the first compressing and encoding method or by the second compressing and encoding method, on the basis of the first attribute information out of the read information; and a decoding device (i) for decoding the entity information for the first menu by the first compressing and encoding method if it is judged by the judgment device that the entity information for the first menu is compressed and encoded by the first compressing and encoding method and (ii) for decoding the entity information for the first menu by the second compressing and encoding method if it is judged by the judgment device that the entity information for the first menu is compressed and encoded by the second compressing and encoding method.

According to the first information reproducing apparatus of the present invention, firstly, the reading device including an optical pickup or the like reads out information from the information recording medium. Secondly, on the basis of the first attribute information recorded in a predetermined area out of the read information, the judgment device including a Central Processig Unit (CPU) or the like judges the compressing and encoding method of the entity information for the first menu, e.g. the VMGM2_VOBS described later. Specifically, it judges whether the entity information for the first menu is compressed and encoded by the first compressing and encoding method, e.g. MPEG 1 or 2, or by the second compressing and encoding method, e.g. MPEG 4. If this judgment device judges that the entity information for the first menu is compressed and encoded by the first compressing and encoding method, the decoding device including a CPU, a decoder, or the like decodes the entity information for the first menu in accordance with the first compressing and encoding method, and reproduces and outputs the first menu constituting a disc menu about a disc as a whole, such as a DVD. On the other hand, if the judgment device judges that the entity information for the first menu is compressed and encoded by the second compressing and encoding method, the decoding device decodes the entity information for the first menu in accordance with the second compressing and encoding method, and reproduces and outputs the first menu.

As a result, according to the first information reproducing apparatus of the present invention, it is constructed as a compatible DVD player compatible with MPEG 4 and MPEG 1 or 2, for example, and it can reproduce the first or second information recording medium efficiently. In particular, if there is the entity information for the first menu made by the first compressing and encoding method, such as MPEG 1 or 2, as the already made entity information for the first menu, this information can be diverted to display the first menu appropriately. Then, while a decoder for menu reproduction and a decoder for Title reproduction or the like are switched, as occasion demands, it is possible to reproduce the menu about a disc as a whole and the corresponding Title without making a user or the like aware of the switching of the decoders.

Incidentally, in response to various aspects in the first or second information recording medium described above, the first information reproducing apparatus of the present invention can also take various aspects.

The above object of the present invention can be achieved by a second information reproducing apparatus for reproducing the above-described third information recording medium provided with: the first entity information; the first management information; the second entity information including the first portion and the second portion; the second management information; the entity information for the first menu; the first attribute information; and the third attribute information (including its various aspects), the second apparatus provided with: a reading device for reading out information from the information recording medium; a first judgment device for judging whether the entity information for the first menu is compressed and encoded by the first compressing and encoding method or by the second compressing and encoding method, on the basis of the first attribute information out of the read information; a second judgment device for judging whether the second entity information is the first portion compressed and encoded by the second compressing and encoding method or the second portion compressed and encoded by the first compressing and encoding method, on the basis of the third attribute information out of the read information; and a decoding device (i) for decoding the entity information for the first menu by the first compressing and encoding method if it is judged by the first judgment device that the entity information for the first menu is compressed and encoded by the first compressing and encoding method, (ii) for decoding the entity information for the first menu by the second compressing and encoding method if it is judged by the first judgment device that the entity information for the first menu is compressed and encoded by the second compressing and encoding method, (iii) for decoding the first portion by the second compressing and encoding method if it is judged by the second judgment device that the second entity information is the first portion compressed and encoded by the second compressing and encoding method, and (iv) for decoding the second portion by the first compressing and encoding method if it is judged by the second judgment device that the second entity information is the second portion compressed and encoded by the first compressing and encoding method.

According to the second information reproducing apparatus of the present invention, it can reproduce and output the first menu as occasion demands, by using the entity information for the first menu upon its operation, as with the first information reproducing apparatus.

In particular, when the second entity information is reproduced and outputted, the second information reproducing apparatus can read the third attribute information, and reproduce and output the second entity information for each portion in which the compressing and encoding method indicated in the third attribute information is identical. Specifically, it can select only a portion indicated by the third attribute information that it is compressed and encoded by the first compressing and encoding method, i.e. the first portion. On the other hand, it can select only a portion indicated by the third attribute information that it is compressed and encoded by the second compressing and encoding method, i.e. the second portion.

This makes it possible to appropriately reproduce the second entity information including the mixture of the unit information based on the second compressing and encoding method, such as MPEG 4, and the unit information based on the first compressing and encoding method, such as MPEG 1 or 2, on the basis of the third attribute information.

Incidentally, in response to various aspects in the third information recording medium described above, the second information reproducing apparatus of the present invention can also take various aspects.

In another aspect of the first or second information reproducing apparatus of the present invention, the decoding device includes a first decoder corresponding to the first compressing and encoding method and a second decoder corresponding to the second compressing and encoding method.

According to this aspect, under the control of a control device constructed from a CPU or the like, it is switched in the decoding device whether the entity information for the first or second menu is decoded by the first decoder or by the second decoder according to the judgment result by the judgment device. When the entity information for the first or second menu compressed and encoded by the first compressing and encoding method is reproduced, the decoding corresponding to the first compressing and encoding method is performed by the first decoder based on MPEG 2 or 1. On the other hand, when the entity information for the first or second menu compressed and encoded by the second compressing and encoding method is reproduced, the decoding corresponding to the second compressing and encoding method is performed by the second decoder based on MPEG 4. Alternatively, when the second entity information including the first portion and the second portion is reproduced, the appropriate decoding can be performed by switching the decoding devices as occasion demands. Namely, the decoding corresponding to the predetermined compressing and encoding methods is appropriately performed by the second decoder in reproducing the first portion corresponding to the second compressing and encoding method and by the first decoder in reproducing the second portion corresponding to the first compressing and encoding method.

This makes it possible to realize the information reproducing apparatus, such as a DVD compatible player, and to perform the menu reproduction or Title reproduction based on the both first and second compressing and encoding methods.

### (Embodiments of Information Reproducing Method)

The above object of the present invention can be achieved by a first information reproducing method of reproducing the above-described first or second information recording medium provided with: the first entity information; the first management information; the second entity information; the second management information; the entity information for the first menu; and the first attribute information (including its various aspects), the first method provided with: a reading process of reading out information from the information recording medium; a judgment process of judging whether said entity information for the first menu is compressed and encoded by the first compressing and encoding method or by the second compressing and encoding method, on the basis of the information read by the reading process; and a decoding process (i) of decoding the entity information for the first menu by the first compressing and encoding method if it is judged by the judgment process that the entity information for the first menu is compressed and encoded by the first compressing and encoding method and (ii) of decoding the entity information for the first menu by the second compressing and encoding method if it is judged by the judgment process that the entity information for the first menu is compressed and encoded by the second compressing and encoding method.

According to the first information reproducing method of the present invention, as with the above-described first information reproducing apparatus, it can reproduce the above-described first or second information recording medium (including its various aspects) relatively efficiently.

Incidentally, in response to various aspects in the first or second information recording medium described above, the first information reproducing method of the present invention can also take various aspects.

The above object of the present invention can be achieved by a second information reproducing method of reproducing the above-described third information recording medium provided with: the first entity information; the first management information; the second entity information including the first portion and the second portion; the second management information; the entity information for the first menu; the first attribute information; and the third attribute information (including its various aspects), the second method provided with: a reading process of reading out information from the information recording medium; a first judgment process of judging whether the entity information for the first menu is compressed and encoded by the first compressing and encoding method or by the second compressing and encoding method, on the basis of the information read by the reading process; a first decoding process (i) of decoding the entity information for the first menu by the first compressing and encoding method if it is judged by the first judgment process that the entity information for the first menu is compressed and encoded by the first compressing and encoding method and (ii) of decoding the entity information for the first menu by the second compressing and encoding method if it is judged by the first judgment process that the entity information for the first menu is compressed and encoded by the second compressing and encoding method; a second judgment process of judging whether the second entity information is the first portion compressed and encoded by the second compressing and encoding method or the second portion compressed and encoded by the first compressing and encoding method, on the basis of the third attribute information out of the read information; and a second decoding process (iii) of decoding the first portion by the second compressing and encoding method if it is judged by the second judgment process that the second entity information is the first portion compressed and encoded by the second compressing and encoding method and (iv) of decoding the second portion by the first compressing and encoding method if it is judged by the second judgment process that the second entity information is the second portion compressed and encoded by the first compressing and encoding method.

According to the second information reproducing method of the present invention, as with the above-described second information reproducing apparatus, it can reproduce the above-described one aspect of the third information recording medium relatively efficiently.

Incidentally, in response to various aspects in the third information recording medium described above, the second information reproducing method of the present invention can also take various aspects.

### (Embodiment of Computer Program)

The above object of the present invention can be achieved by a computer program for tangibly embodying a program of instructions executable by a computer to make the computer function as the above described first or second information reproducing apparatus. More specifically, it can be achieved by the computer program product to make the computer function as at least one of the reading device, the judgment device, and the decoding device in the above-described first information reproducing apparatus. Alternatively, it can be achieved by the computer program product to make the computer function as at least one of the reading device, the first judgment device, the second judgment device, and the decoding device in the above-described second information reproducing apparatus.

According to the computer program of the present invention, the above described first or second information recording apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the above-described first or second information recording apparatus.

Incidentally, in response to various aspects in any one of the first, second, and third information recording media described above, the computer program product of the present invention can also take various aspects.

The nature, utility, and further features of this invention will be more clearly apparent from the following detailed description with reference to preferred embodiments of the invention when read in conjunction with the accompanying drawings briefly described below.
FIG. 1 shows the basic structure of an optical disc, which is one embodiment of an information recording medium of the present invention, wherein the upper part is a substantial plan view of the optical disc having a plurality of areas and the lower part, which corresponds to this upper part, is a schematic diagram of the area structure in its radial direction;
FIG. 2 is a schematic diagram showing a data structure recorded on the optical disc related to the embodiment;
FIG. 3 is a schematic diagram showing the detail of a data structure in a Video Manager 2 (VMG2) shown in FIG. 2;
FIG. 4 is a schematic diagram showing the detail of a data structure in a Video Manager Manu 2 Program Chain Information Unit Table (VMGM2_PGCI_UT) shown in FIG. 3;
FIG. 5 is a schematic diagram showing the detail of a data structure in a Video Manager Menu 2 Cell Address Table (VMGM2_C_ADT) shown in FIG. 3;
FIG. 6 is a schematic diagram showing the detail of a data structure in a Title Search Pointer Table 2 (TT_SRPT2) shown in FIG. 3;
FIG. 7 is a schematic diagram showing the detail of a data structure in a Video Title Set 2 (VTS2) shown in FIG. 2;
FIG. 8 is a schematic diagram showing the detail of a data structure in a Video Title Set Menu 2 Program Chain Information Unit Table (VTSM2_PGCI_UT) shown in FIG. 7;
FIG. 9 is a schematic diagram showing the detail of a data structure in a Video Title Set 2 Program Chain Information Table (VTS2_PGCIT) shown in FIG. 7;
FIG. 10 is a schematic diagram showing the detail of a data structure in a Video Title Set Menu 2 Cell Address Table (VTSM2_C_ADT) shown in FIG. 7;
FIG. 11 is a schematic diagram showing the detail of a data structure in a Video Title Set 2 Cell Address Table (VTS2_C_ADT) shown in FIG. 7;
FIG. 12 is a schematic diagram showing the detail of a data structure in a Video Object (VOB) related to the embodiment;
FIG. 13 is a schematic diagram showing a logical structure (logical format) in the optical disc related to the embodiment;
FIG. 14 is a block diagram in an embodiment of an information reproducing apparatus;
FIG. 15 is a flowchart showing the reproduction operation of the information reproducing apparatus related to the embodiment;
FIG. 16 is a flowchart showing the reproduction operation of another information reproducing apparatus related to the embodiment; and
FIG. 17 is a flowchart showing the reproduction operation of another information reproducing apparatus related to the embodiment.

The embodiments of the present invention will be explained with reference to the drawings hereinafter.

### (Information Recording Medium)

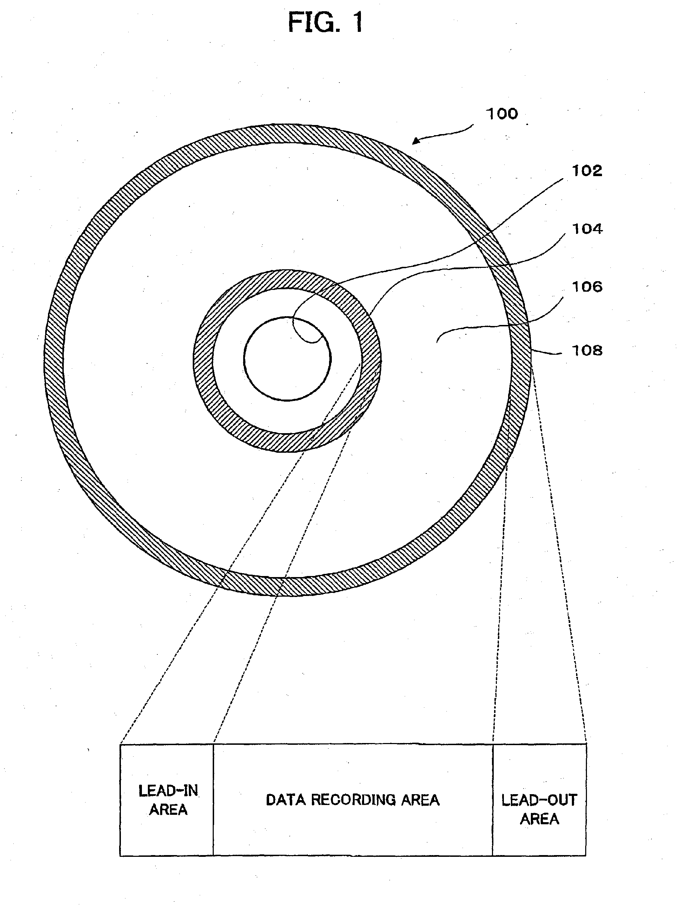

An embodiment of an information recording medium of the present invention will be explained with reference to FIG. 1 to FIG. 13. In this embodiment, the information recording medium of the present invention is applied to an optical disc of a reproducible type with a red laser.

Firstly, the basic structure of an optical disc in the embodiment will be explained with reference to FIG- 1. FIG. 1 shows the structure of the optical disc having a plurality of areas by using a substantial plan view on the upper part, as well as relating it to the area structure in its radial direction by using a schematic diagram on the lower part.

An optical disc 100 is a reproduce only disc. Alternatively, it is recordable (or writable) many times or only once in various recording methods, such as the magneto-optical method and the phase change method. The optical disc 100 has a recording surface on the disc main body with a diameter of about 12 cm, as is a DVD. On the recording surface, as shown in FIG. 1, the optical disc 100 is provided with: a lead-in area 104; a data area 106; and a lead-out area 108, in this order from the inner to the outer circumference, with a center hole 102 as the center. In each area, spirally or concentrically with the center hole 102 as the center, reproduction tracks formed of pit rows are placed in the case of the reproduce only disc, and groove tracks and land tracks are placed alternately in the case of the recordable disc, for example. The groove tracks may be wobbled. Alternatively or additionally, pre-pits may be formed on either one of or both groove and land tracks. Incidentally, the present invention is not specially limited to an optical disc having these three areas. For example, even if the lead-in area 104 and the lead-out area 108 do not exist, a file structure explained below can be constructed.

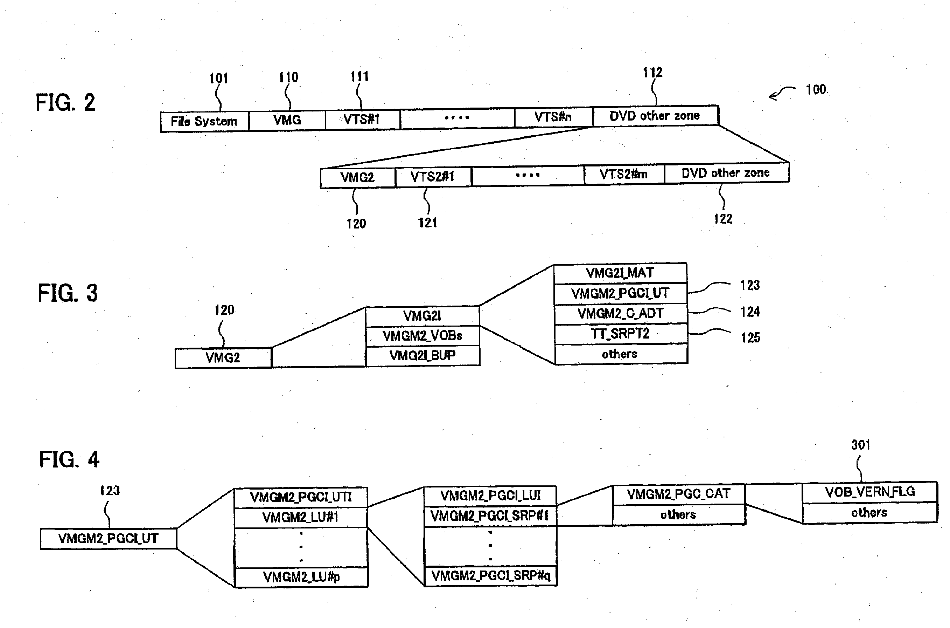

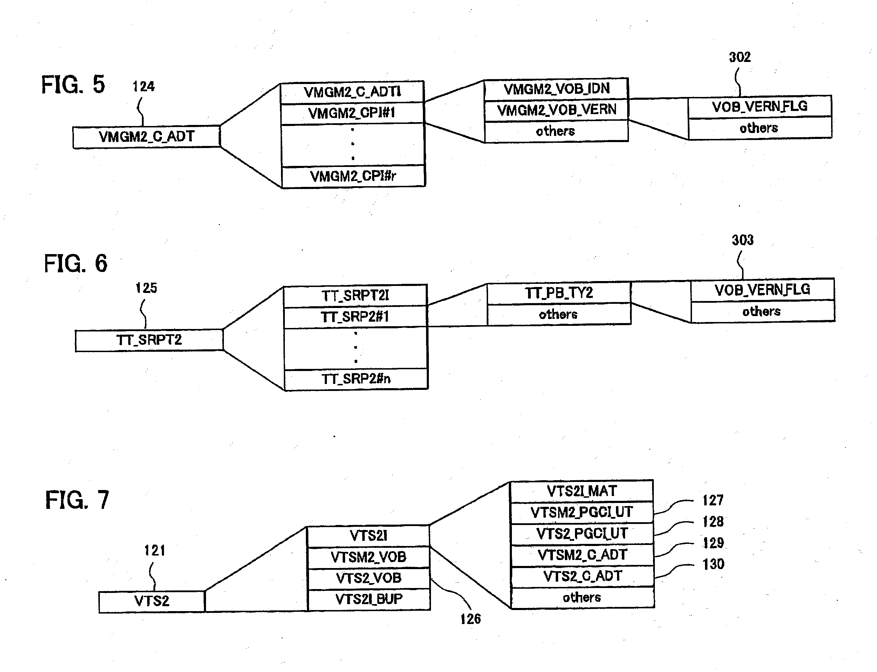

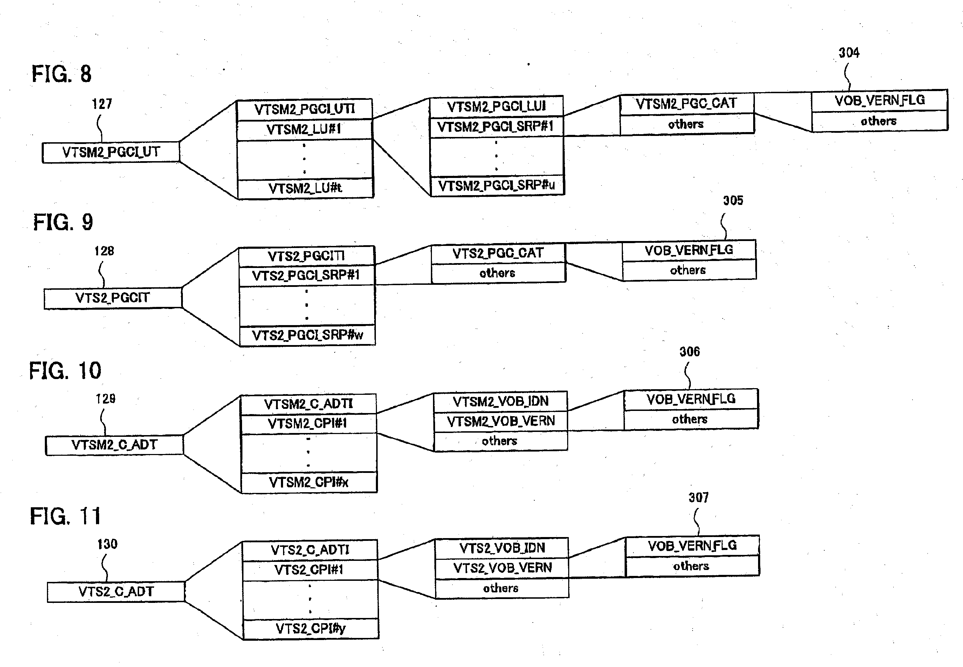

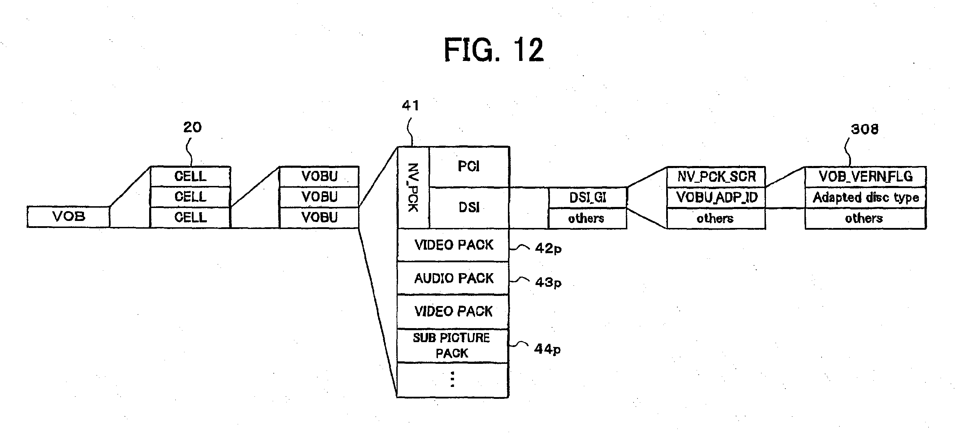

Next, a data structure recorded on the optical disc 100 will be explained with reference to FIG. 2 to FIG. 12. FIG. 2 is a schematic diagram showing a data structure recorded on the optical disc 100. FIG. 3 is a schematic diagram showing the detail of a data structure in a Video Manager 2 (VMG2) shown in FIG. 2. FIG. 4 is a schematic diagram showing the detail of a data structure in a Video Manager Manu 2 Program Chain Information Unit Table (VMGM2_PGCI_UT) shown in FIG. 3. FIG. 5 is a schematic diagram showing the detail of a data structure in a Video Manager Menu 2 Cell Address Table (VMGM2_C_ADT) shown in FIG. 3. FIG. 6 is a schematic diagram showing the detail of a data structure in a Title Search Pointer Table 2 (TT_SRPT2) shown in FIG. 3. FIG. 7 is a schematic diagram showing the detail of a data structure in a Video Title Set 2 (VTS2) shown in FIG. 2. FIG. 8 is a schematic diagram showing the detail of a data structure in a Video Title Set Menu 2 Program Chain Information Unit Table (VTSM2_PGCI_UT) shown in FIG. 7. FIG. 9 is a schematic diagram showing the detail of a data structure in a Video Title Set 2 Program Chain Information Table (VTS2_PGCIT) shown in FIG. 7. FIG. 10 is a schematic diagram showing the detail of a data structure in a Video Title Set Menu 2 Cell Address Table (YTSM2_C_ADT) shown in FIG. 7. FIG. 11 is a schematic diagram showing the detail of a data structure in a Video Title Set 2 Cell Address Table (VTS2_C_ADT) shown in FIG. 7. FIG. 12 is a schematic diagram showing the detail of a data structure in a Video Object (VOB).

As shown in the upper part of FIG. 2, the optical disc 100 is provided with: a file system 101; a "VMG" 110; a plurality of VTS(s) 111 (i.e. VTS#1, VTS#2, ..., VTS#n); and a DVD other zone 112, as a logical structure.

The file system 101 includes information (e.g. data, a data list, a data file, or a data table) for managing physical recording areas of various files recorded on the optical disc 100. The "VMG" 110 is one example of "the first management information" of the present invention and is information (e.g. data, a data list, a data file, or a data table) for managing and controlling each VTS#i (i = 1, 2, ..., n) 111. Each VTS#i 111 is one example of "the first entity information" of the present invention and is information (e.g. data, a data list, a data file, or a data table) compressed and encoded by MPEG 1 or MPEG 2.

Incidentally, in this embodiment, the VTS#i 111 is a set (or a group) of relating Titles (i.e. Titles which have the same numbers of audio information and sub picture information included therein, the same specification, the same attribute, such as a corresponding language, or the like).

In this embodiment, a first video zone having the same data structure as that of a conventional DVD Version 1.X (Ver1.X) is constructed on the optical disc 100 by the "VMG" 110 and the VTS#i 111. In this first video zone, contents information based on the SD standard is recorded as the VTS#i 111. This VTS#i 111 is managed and controlled by the "VMG" 110.

As shown in the lower part of FIG. 2, the optical disc 100 is further provided with: a "VMG2" 120; a plurality of "VTS2(s)" 121 (i.e. VTS2#1, VTS2#2, ..., VTS2#m); and a DVD other zone 122, in the DVD other zone 112.

The "VMG2" 120 is one example of "the second management information" of the present invention and is information (e.g. data, a data list, a data file, or a data table) for managing and controlling each VTS2#j (j = 1, 2, ..., m) 121. Each VTS2#j 121 is one example of "the second entity information" of the present invention and is information (e.g. data, a data list, a data file, or a data table) compressed and encoded by MPEG 4, which is a compressing and encoding method different from that in the first video zone.

Incidentally, in this embodiment, the VTS2#j 121 is a set (or a group) of relating Titles (i.e. Titles which have the same numbers of audio information and sub picture information included therein, the same specification, the same attribute, such as a corresponding language, or the like).

In this embodiment, a second video zone having a data structure of Version 2.0 (Ver2.0), which is a different data structure from that of a conventional DVD, is constructed on the optical disc 100 by the "VMG2" 120 and the VTS2#j 121. In this second video zone, contents information based on the HD standard or High Vision contents information, which is different from the information in the first video zone, and contents information based on the SD standard, which is the same as the information in the first video zone, is recorded as the VTS2#j 121. This VTS2#j 121 is managed and controlled by the "VMG2" 120.

This embodiment is constructed such that the "VMG2" 120 manages and controls not only the VTS2#j 121 as being one example of the second entity information but also the VTS#i 111 as being one example of the first entity information. Namely, upon reproducing the optical disc 100, a DVD player compatible with Ver2.0 (e.g. a DVD player compatible with MPEG 4), which can reproduce the VTS2#j 121, enables the appropriate reproduction of not only the VTS2#j 121 but also the VTS#i 111, by referring to the "VMG2" 120 without any necessity to refer to the "VMG" 110.

Specifically, the "VMG2" 120 has therein information for managing the "VTS" 111 in addition to information for managing the "VTS2" 121. It is possible to manage and control the "VTS" 111 by referring to the "VMG2" 120 without referring to the "VMG" 110.

Moreover, upon reproducing the optical disc 100, a DVD player compatible with Ver1.X (e.g. a DVD player compatible with MPEG 2), which cannot reproduce the VTS2#j 121 but which can reproduce the VTS#i 111, enables the conventional appropriate reproduction of the VTS#i 111, by referring to the "VMG" 110 without reference to the VTS2#j 121 nor the "VMG2" 120.

Particularly in this embodiment, it is possible to divert information about Video Object Set for Video Manager Menu (VMGM_VOBS) included in the "VMG" 110 to Video Object Set for Video Manager Menu 2 (VMGM2_VOBS) included in the "VMG2" 120. Namely, when it is desired to newly make the "VTS2" 121 as the Title based on MPEG 4, it is possible to use the existing VMGM_VOBS for another purpose, e.g. using as disc menu information as described later, without newly making the VMGM2_VOBS based on MPEG 4.

The same is true for Video Object for Video Title Set Menu 2 (VTSM2_VOB) included in each "VTS2" 121, and it is possible to divert information about Video Object for Video Title Set Menu (VTSM_VOB) included in the "VTS" 111. Namely, when it is desired to newly make the "VTS2" 121 as the Title based on MPEG 4, it is possible to use the existing VTSM_VOB for another purpose, e.g. to use it as menu information for each Title as described later, without newly making the VTSM2_VOB based on MPEG 4. Incidentally, the VMGM2_VOBS, the VMGM_VOBS, the VTSM2_VOB, and the VTSM_VOB will be described later.

As shown in the middle of FIG. 3, the "VMG2" 120 shown in FIG. 2 includes: Video Manager 2 Informaiton (VMG2I); Video Object Set for Video Manager Menu 2 (VMGM2_VOBS); and Backup of Video Manager 2 Information (VMG2I_BUP).

The "VMG2I" is various logical information (e.g. a data, a data list, a data file, or a data table) about whole of the "VMG2" 120. The "VMGM2_VOBS" is object information or entity information (e.g. a data, a data list, a data file, or a data table) including video information or the like for displaying a menu screen, such as a disc menu, regarding all of the VTS2#j 121 (refer to FIG. 2) managed and controlled by the "VMG2" 120. Namely, this embodiment is constructed such that the reproduction of a disc menu or an entire menu about the whole optical disc 100 can be controlled even with the "VMG2" as being one example of the second management information. The "VMGI2_BUP" is backup information of the VMG2I (e.g. a data, a data list, a data file, or a data table) recorded in view of the importance of the VMG2I. This VMGI2_BUP can prevent from interfering with the reproduction of the VTS2#j 121 even if the VMG2I is destroyed.

Particularly in this embodiment, "the first attribute information", which is recorded as flag information in an empty or reserved area in a predetermined recording area as descried later, indicates the compressing and encoding method of the VMGM2_VOBS related to this embodiment, for example.

Incidentally, the "VMG" 110 also includes the VMGI, the VMGM_VOBS, and the VMGI_BUP (which are not illustrated), as in the case of the "VMG2" 120 as described above.

As shown in the right part of FIG. 3, the "VMG2I" has: a Video Manager 2 Information Management Table (VMG2I_MAT); a Video Manager Menu 2 Program Chain Information Unit Table (VMGM2_PGCI_UT) 123; a Video Manager Menu 2 Cell Address Table (VMGM2_C_ADT) 124; a Title Search Pointer Table 2 (TT_SRPT2) 125; and other information.

The "VMG21_MAT" is a table including various logical information tables about the "VMG2" 120.

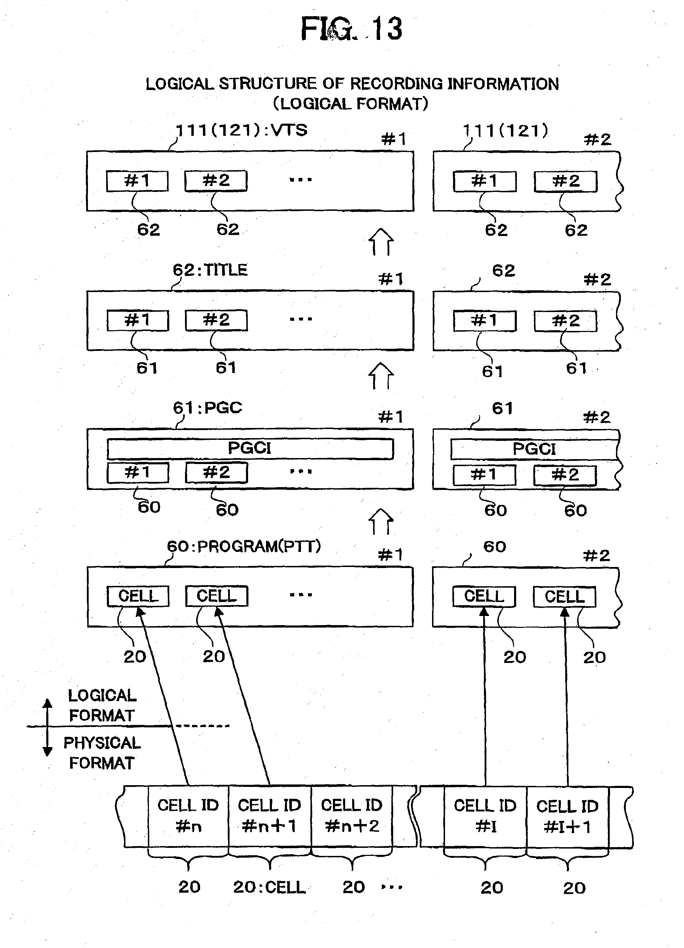

As shown in FIG. 4, the "VMGM2_PGCI_UT" 123 shown in FIG. 3 is a table written in each language for indicating information about Program Chain Information (PGCI) which defines a Program Chain (PGC) that is a logical division made by combining a plurality of Cells constituting the VMGM2_VOBS (refer to FIG. 3), for example. Specifically, it includes: Video Manager Menu 2 Program Chain Information Unit Table Information (VMGM2_PGCI_UTI) for indicating various logical information about the "VMGM2_PGCI_UT" 123; and Video Manager Menu 2 Language Unit (VMGM2_LU) #1, ..., and VMGM2_LU #p, for indicating unit information of Video Manager Menu 2 Program Chain Information (VMGM2_PGCI) which is grouped for each language. Incidentally, the Cells and the PGCI will be described later (refer to FIG. 12 and FIG. 13).

The VMGM2_LU #l (l=1, ..., p) includes: Video Manager Menu 2 Language Unit Information (VMGM2_LUI) for indicating various logical information about the VMGM2_LU #l; and VMGM2_PCGI Search Pointer (VMGM2_PGCI_SRP) #1, ..., and VMGM2_PGCI_SRP #q, for indicating management information for accessing the VMGM2_PGCI, as shown in FIG.4.

The VMGM2_PGCI_SRP #l (l=1, ..., q) includes: a VMGM2 PGC Category (VMGM2_PGC_CAT) for indicating the type of the VMGM2_PGC which is pointed; and other areas, as shown in FIG. 4.

The VMGM2_PGC_CAT includes: a Video Object Version Flag ("VOB_VERN_FLG") 301 as being one example of the empty area in which "the first attribute information" related to the present invention is recorded; and other areas, as shown in FIG. 4.

For example, a 1-bit area is assigned to the "VOB_VERN_FLG" 301. If e.g. "0b" is recorded as the flag information in this area, this means that out of the VMGM2_VOBS as being one example of "the entity information for the first menu" of the present invention, video data which is reproduced according to the PGC is compressed and encoded with the data structure of Ver1.X, i.e. in accordance with MPEG 1 or 2. Alternatively, if e.g. "1b" is recorded, this means that the video data is compressed and encoded with the data structure of Ver2.0, i,e. in accordance with MPEG 4. Incidentally, the mark "b" in the "0b" and the "1b" indicates that "0" or "1" is binary data.

As shown in FIG. 5, the "VMGM2_C_ADT" 124 shown in FIG. 3 has tables including a plurality of Cells constituting the VMGM2_VOBS or a start address or end address of an interleaved unit. The interleaved unit is a unit of data in which a plurality of video information corresponding to the relative Angles are stored in a nesting structure to allow the seamless reproduction of video from different viewpoints (i.e. so-called "Angle reproduction").

Specifically, it includes: Video Manager Menu 2 Cell Address Table Information (VMGM2_C_ADTI) for indicating various logical information about the "VMGM2_C_ADT) 124; Video Manager Menu 2 Cell Piece Information (VMGM2_CPI) #1, ..., and VMGM2_CPI #r, for indicating relative information of a plurality of Cells constituting the VMGM2_VOBS. Incidentally, the Cells will be described later (refer to FIG. 12 and FIG. 13).

The VMGM2_CPI #l (l=1, ..., r) includes: VOB ID number for the VMGM2 Cell Piece (VMGM2_VOB_IDN) for indicating the identification number of the VMGM2_VOBS constructed from the Cells indicated by the VMGM2_CPI #l; and VMGM2 Video Object Version (VMGM2_VOB_VERN) in which version information of the VMGM2_VOBS constructed from the Cells indicated by the VMGM2_CPI #1 is written, as shown in FIG. 5

The VMGM2_VOB_VERN includes: a Video Object Version Flag (" VOB_VERN_FLG") 302 as being another example of the empty area in which "the first attribute information" related to the present invention is recorded; and other areas, as shown in FIG. 5

For example, a 1-bit area is assigned to the "VOB_VERN_FLG" 302. If e.g. "0b" is recorded as the flag information in this area, this means that out of the VMGM2_VOBS as being an example of "the entity information for the first menu" of the present invention, video data included in the Cells is compressed and encoded with the data structure of Ver1.X, i.e. in accordance with MPEG 1 or 2. Alternatively, if e.g. "1b" is recorded, this means at the video data is compressed and encoded with the data structure of Ver2.0, i.e. in accordance with MPEG 4.

As shown in FIG. 6, the "TT_SRPT2" 125 shown in FIG. 3 is a management information table for accessing each Title managed by the "VMG2" 120. The "TT_SRPT2" 125 includes: Title Search Pointer Table 2 Information (TT_SRPT2I), which is various logical information about the "TT_SRPT2" 125; and Title Search Pointer 2 (TT_SRP2) #1, ..., and TT_SRP2#s, each of which is management information provided for the relative one of Titles.

The TT_SRP2#l (l = 1, ..., s) includes; a Title Playback Type 2 (TT_PB_TY2), which is information for indicating the type of a Title of interest, such as a branch type; and other areas.

The TT_PB_TY2 includes: a Video Object Version Flag (" VOB_VERN_FLG") 303 as being another example of the empty area in which "the third attribute information" related to the present invention is recorded; and other areas, as shown in FIG. 6.

For example, a 1-bit area is assigned to the "VOB_VERN_FLG" 303. If e.g. "0b" is recorded as the flag information in this area, this means that out of the VTS2_VOB as being an example of "the second entity information" of the present invention, video data related to a Title of interest is compressed and encoded with the data structure of Ver1.X, i.e, in accordance with MPEG 1 or 2. Alternatively, if e.g. "1b" is recorded, this means that the video data is compressed and encoded with the data structure of Ver2.0, i e. in accordance with MPEG 4.

Next, as shown in FIG. 7, the "VTS2#l (l=1, ..., m)" 121 includes: Video Title Set 2 Information (VTS2I); Video Object Set for Video Title Set Menu 2 (VTSM2_VOB); Video Object Set for Video Title Set 2 (VTS2_VOB) 126; and Backup of Video Title Set 2 Information (VTS2I_BUP), which is the backup file of the VTS2I.

The "VTS2I" includes: a Video Title Set 2 Informaiton Management Table (VTS2I_MAT); a Video Title Set Menu 2 Program Chain Information Unit Table (VTSM2_PGCI_UT) 127; a Video Title Set 2 Program Chain Information Table (VTS2_PGCIT) 128; a Video Title Set Menu 2 Cell Address Table (VTSM2_C_ADT) 129; a Video Title Set 2 Cell Address Table (VTS2_C_ADT) 130; other information; and VTS2 Inside information.

In such VTS21, Program Chain Information (PGCI), which is various information about a Program Chain, that is, a logical division made by combining a plurality of Cells (which will be described later), or similar information, is recorded as the VTS2 Inside information or as the other information, as in the case of the VTSI. Moreover, in each VTS2_VOB 126, the entity part of video information and audio information is recorded in addition to various control information. The Cells and the PGCI will be described later (refer to FIG. 12 and FIG. 13).

The "VTSM2_VOB" is object information or entity information (e.g. a data, a data list, a data file, or a data table) including video information or the like for displaying a menu screen for each "VTS2#l (l=1, ...; m)", such as a Title menu.

Particularly in this embodiment, "the second attribute information", which is recorded in an empty area in a predetermined recording area as descried later, indicates the compressing and encoding method of the VTSM2_VOB related to this embodiment, for example.

The "VTS2I_BUP" is backup information of the VTS2I (e.g. a data, a data list, a data file, or a data table) recorded in view of the importance of the VTS2I. This VTS2I_BUP can prevent from interfering with the reproduction of the VTS2#l (l=1, ..., m) 121 even if the VTS2I is destroyed.

Incidentally, the "VTS" 111 also includes the VTSI, the VTSM_VOBS, and the VTS2I_BUP (which are not illustrated), as in the case of the "VTS2" 121 as described above.

As shown in FIG. 8, the "VTSM2_PGCI_UT" 127 shown in FIG. 7 is a table written in each language for indicating information about the PGCI which defines the Program Chain that is a logical division made by combining a plurality of Cells constituting the VTSM2_VOB (refer to FIG. 7), for example. Specifically, it includes: Video Title Set Menu 2 Program Chain Information Unit Table Information (VTSM2_PGCI_UTI) for indicating various logical information about the "VTSM2_PGCI_UT" 127; and Video Title Set Menu 2 Language Unit (VTSM2_LU) #1, ..., and VTSM2_LU #t, for indicating unit information of Video Title Set Menu 2 Program Chain Information (VTSM2_PGCI) which is grouped for each language. Incidentally, the Cells and the PGCI will be described later (refer to FIG. 12 and FIG. 13).

The VTSM2_LU #l (l=1, ..., t) includes: Video Title Set Menu 2 Language Unit Information (VTSM2_LUI) for indicating various logical information about the VTSM2_LU #l; and Video Title Set Menu 2 Program Chain Infomration Search Pointer (VTSM2_PGCI_SRP) #1, ..., and VMGM2_PGCI_SRP #u, for indicating management information for accessing the VTSM2_PGCI, as shown in FIG. 8.

The VTSM2_PGCI_SRP #l (l=1, ..., u) includes: a Video Title Set Menu 2 Program Chain Category (VTSM2_PGC_CAT) for indicating the type of the VTSM2_PGC; and other areas, as shown in FIG. 8.

The VTSM2_PGC_CAT includes: a Video Object Version Flag ("VOB_VERN_FLG") 304 as being another example of the empty area in which "the second attribute information" related to the present invention is recorded; and other areas, as shown in FIG. 8.

For example, a 1-bit area is assigned to the "VOB_VERN_FLG" 304. If e.g. "0b" is recorded as the flag information in this area, this means that out of the VTSM2_VOB as being an example of "the entity information for the second menu" of the present invention, video data which is reproduced according to the PGC is compressed and encoded with the data structure of Ver1.X, i.e. in accordance with MPEG 1 or 2. Alternatively, if e.g. "1b" is recorded, this means that the video data is compressed and encoded with the data structure of Ver2.0, i.e. in accordance with MPEG 4.

As shown in FIG. 9, the "VTS2_PGCIT" 128 shown in FIG. 7 is a table written in various languages for indicating information about the PGCI which defines the Program Chain that is a logical division made by combining a plurality of Cells constituting the VTS2_VOB (refer to FIG. 7), for example. Specifically, it includes: Video Title Set 2 Program Chain Information Table Information (VTS2_PGCITI) for indicating various logical information about the "VTS2_PGCIT" 128; and Video Title Set 2 Program Chain Information Search Pointer (VTS2_PGCI_SRP) #1, ..., and VTS2_PGCI_SRP #w, for indicating management information for accessing Video Title Set 2 Program Chain Information (VTS2_PGCI).

The VTS2_PGCI_SRP #l (l=1, ..., w) includes: a Video Title Set 2 Program Chain Category (VTS2_PGC_CAT) for indicating the type of the VTS2_PGC; and other areas, as shown in FIG, 9.

The VTS2_PGC_CAT includes: a Video Object Version Flag ("VOB_VERN_FLG") 305 as being another example of the empty area in which "the third attribute information" related to the present invention is recorded; and other areas, as shown in FIG. 9.

For example, a . 1-bit area is assigned to the "VOB_VERN_FLG" 305. If e.g. "0b" is recorded as the flag information in this area, this means that out of the VTS2_VOB as being an example of "the second entity information" of the present invention, video data which is reproduced according to the PGC is compressed and encoded with the data structure of Ver1.X, i.e. in accordance with MPEG 1 or 2. Alternatively, if e.g. "1b" is recorded, this means that the video data is compressed and encoded with the data structure of Ver2.0, i.e. in accordance with MPEG 4.

As shown in FIG. 10, the "VTSM2_C_ADT" 129 shown in FIG. 7 has tables including a plurality of Cells constituting the VTSM2_VOB or a start address or end address of an interleaved unit. Specifically, it includes: Video Title Set Menu 2 Cell Address Table Information (VTSM2_C_ADTI) for indicating various logical information about the "VTSM2_C_ADT" 129; Video Title Set Menu 2 Cell Piece Information (VTSM2_CPI) #1, ..., and VTSM2_CPI #x, for indicating relative information of a plurality of Cells constituting the VTSM2_VOB. Incidentally, the Cells will be described later (refer to FIG. 12 and FIG. 13).

The VTSM2_CPI #1 (l=1, ..., x) includes: VOB ID -number for the Video Title Set Menu 2 Cell Piece VTSM2_VOB_IDN for indicating the identification number of the VTSM2_VOB; and Video Title Set Menu 2 Video Object Version (VTSM2_VOB_VERN) in which version information of the VTSM2_VOB constructed from the Cells indicated by the VTSM2_CPI #1 is written, as shown in FIG. 10

The VTSM2_VOB_VERN includes: a Video Object Version Flag ("VOB_VERN_FLG") 306 as being one example of the empty area in which "the second attribute information" related to the present invention is recorded; and other areas, as shown in FIG. 10.

For example, a 1-bit area is assigned to the "VOB_VERN_ FLG" 306. If e.g. "0b" is recorded as the flag information in this area, this means that out of the VTSM2_VOB as being an example of "the entity information for the second menu" of the present invention, video data included in the Cells is compressed and encoded with the data structure of Ver1.X, i.e. in accordance with MPEG 1 or 2. Alternatively, if e.g. "1b" is recorded, this means that the video data is compressed and encoded with the data structure of Ver2,0, i.e. in accordance with MPEG 4,

As shown in FIG. 11, the "VTS2_C_ADT" 130 shown in FIG. 7 has tables including a plurality of Cells (which will be described later) constituting the VTS2_VOB or a start address or end address of an interleaved unit. Specifically, it includes: Video Title Set 2 Cell Address Table Information (VTS2_C_ADTI) for indicating various logical information about the "VTS2_C_ADT" 130; Video Title Set 2 Cell Piece Information (VTS2_CPI) #1, ..., and VTS2_CPI #y, for indicating relative information of a plurality of Cells constituting the VTS2_VOB.

The VTS2_CPI #1 (l=1, ..., y) includes: VOB ID number for the Video Title Set 2 Cell Piece (VTS2_VOB_IDN) for indicating the identification number of the VTS2_VOB; and Video Title Set 2 Video Object Version (VTS2_VOB_VERN) in which version information of the VTS2_VOB constructed from the Cells indicated by the VTSM2_CPI#l is written, as shown in FIG. 10

The VTS2_VOB_VERN includes: a Video Object Version Flag ("VOB_VERN_FLG") 307 as being one example of the empty area in which "the third attribute information" related to the present invention is recorded; and other areas, as shown in FIG. 11.

For example, a 1-bit area is assigned to the "VOB_VERN_FLG" 307. If e.g. "0b" is recorded as the flag information in this area, this means that out of the VTS2_VOB as being an example of "the second entity information" of the present invention, video data included in the Cells is compressed and encoded with the data structure of Ver1.X, i.e. in accordance with MPEG 1 or 2. Alternatively, if e.g. "1b" is recorded, this means that the video data is compressed and encoded with the data structure of Ver2.0, i.e. in accordance with MPEG 4.

Next, as shown in FIG. 12, the data structure of various entity information, i.e. the VMGM2_VOBS (refer to FIG. 3), the VTSM2_VOB (refer to FIG. 7), or the "VTS2_VOB" 126 (refer to FIG. 7), will be explained with the "Cell".

As shown in FIG. 12, each VOB has its own identification number (VOBID#1, #2, ...), such as the above-described VMGM2_VOB_IDN (refer to FIG. 5), VTSM2_VOB_IDN (refer to FIG. 10), or VTS2_VOB_IDN (refer to FIG. 11).

Each VOB is constructed from a plurality of Cells 20, each of which has its own ID number (i.e. an ID number unique to the Cell). Incidentally, the Cell 20 is one processing unit as the physical format of the optical disc 100. One of the Cells 20 is constructed from a plurality of VOB Units (VOBU), each of which has its own ID number (i.e. an ID number unique to the VOB). The "VOBU (Video Object Unit)" includes any one of video information, audio information, and sub-picture information (which is information about sub-pictures, such as subtitles in a movie). Alternatively, it may include only a Navi Pack (NV_PCK) 41, which is described in detail later. Also, the VOBU is one information unit accessible by using an information reproducing apparatus.

One VOBU includes the NV_PCK 41, which stores therein control information whose control object is the video information or the like included in the VOBU. One VOBU may stores therein contents information packed in the entity information. Specifically it includes at least one of a Video Pack 42p including video data as the video information; an Audio Pack 43p including audio data as the audio information; and a Sub Picture Pack 44p including sub picture data as the sub picture information. It may include only the NV_PCK 41, as described above. In a pack header recorded at the head of each Pack, there is recorded information about a reading start time point, which is referred to as System Clock Reference (SCR), for indicating a reading start time point on a reproduction time axis, at which data included in each Pack is supposed to be read out from a track buffer on a reproducing apparatus described below and also to be inputted to each buffer. Also, a start code for indicating the start of the Pack, or the like are recorded in the pack header. The data length of each Pack may be either variable or fixed.

The NV_PCK 41 includes: Data Search Information (DSI), which is search information for searching for video or audio desired to reproduce and display; and Presentation Control Information (PCI) data 50, which is information about reproduction and display control upon reproducing and displaying the video or audio searched for on the basis of the DSI.

The DSI includes: DSI General Information (DSI_GI), which is various logical information about the DSI; and other areas.

The DSI_GI includes: NV_PCK_SCR; a Video Object Unit Adaptation Identifier (VOBU_ADP_ID); and other areas. The NV_PCK_SCR indicates the low 32 bits of a System Clock Reference (SCR) indicated in the NV_PCK. Namely, it indicates the basis bit or start bit of the SCR. The VOBU_ADP_ID indicates the type of a disc to which predetermined specifications (video specification) are applied.

The VOBU_ADP_ID includes: a Video Object Version Flag ("VOB_VERN_FLG") 308 as being another example of the empty area in which at least one of "the first, second, and third attribute information" related to the present invention is recorded; and other areas,

For example, a 1-bit area is assigned to the ''VOB_VERN_FLG" 308. If e.g. "0b" is recorded as the flag information in this area, this means that the VOBU including the "VOB_VERN_FLG" 308 as being an example of "the entity information for the first menu, the entity information for the second menu, or the second entity information" of the present invention is compressed and encoded with the data structure of Ver1.X, i.e. in accordance with MPEG 1 or 2. Alternatively, if e.g. "1b" is recorded, this means that the VOBU is compressed and encoded with the data structure of Ver2.0, i.e. in accordance with MPEG 4.

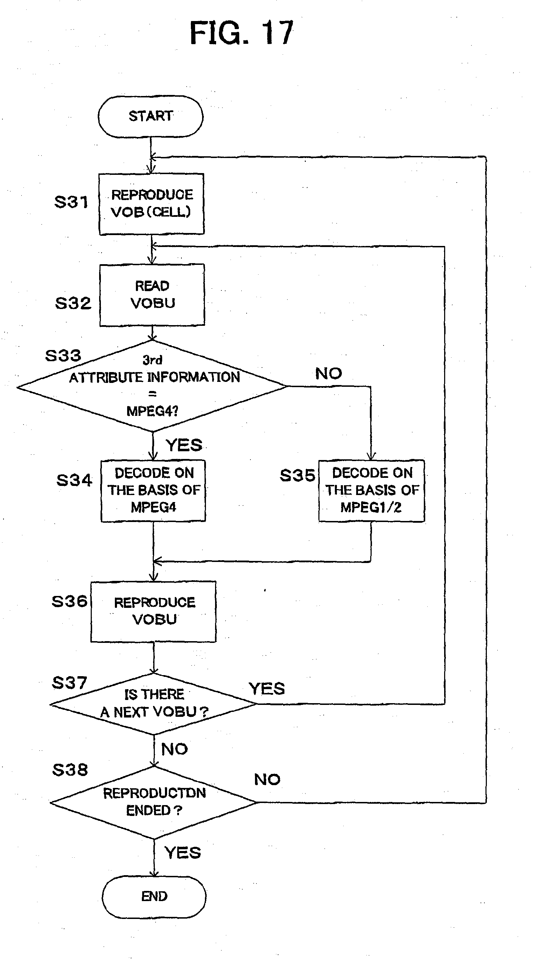

For example, "the third attribute information" of the present invention is recorded in the "VOB_VERN_FLG" 308, thereby to indicate each compressing and encoding method for relative one of the VOBU. This makes it possible to reproduce the VTS2 while allowing the mixture in the same VTS2 of the compressing and encoding methods in the VOBU (refer to FIG. 12) which constitutes the VTS2 (refer to FIG. 2) as being one example of the second entity information, as described later (refer to FIG. 17).

Note that the third attribute information, which allows the mixture in the same VTS2 of the compressing and encoding methods, does not have to be written in each VOBU directly. For example, the third attribute information may be constructed from information for indicating the compressing and encoding method for each VOBU in a table form. Moreover, the information unit with which the third attribute information indicates each compressing and encoding method is also not limited to the VOBU. It may be an information unit of a Cell unit constructed from a plurality of VOBU, or of a pack unit made by segmentalizing the VOBU, or the like, In any case, the indication of the compressing and encoding method by the third attribute information allows the mixture of the compressing and encoding methods in the plurality of contents information and allows its reproduction.

Incidentally, even the first attribute information for indicating the compressing and encoding method of the VMGM2, such as a disc menu, and the second attribute information for indicating the compressing and encoding method of the VTSM2, such as a Title menu, can be also recorded in the VOBU as described above.

As explained in FIG. 1 to FIG. 12, the flag information for indicating the compressing and encoding method of the VMGM2_VOBS for displaying and outputting a disc menu is recorded in the VOB_VERN_FLGs 301 and 302, and the VOB_VERN_FLG 308 in the VMGM2_VOBS, for example. Therefore, by an information reproducing apparatus, such as a DVD player, accessing the flag information, it can be judged whether the VMGM2_VOBS is the entity information newly made in accordance with MPEG 4 or the entity information included in the existing VMGM_VOBS constructed in accordance with MPEG 1 or 2.

In the same manner, the flag information for indicating the compressing and encoding method of the VTSM2_VOB for displaying and outputting a Title menu is recorded in the VOB_VERN_FLGs 304 and 306, and the VOB_VERN_FLG 308 in the VTSM2_VOB, for example. Therefore, by an information reproducing apparatus, such as a DVD player, accessing the flag information, it can be judged whether the VTSM2_VOB is the entity information newly made in accordance with MPEG 4 or the entity information included in the existing VMGM_VOBS constructed in accordance with MPEG 1 or 2.

The same is true for the VT52_VOB for displaying and outputting video contents, which includes: a plurality of VOBU compressed and encoded in accordance with MPEG 1 or 2; and a plurality of VOBU compressed and encoded in accordance with MPEG 4, by virtue of the VOB_VERN_FLGs 303, 305, and 307 and the VOB_VERN_FLG 308 in the VTS2_VOB. The VTS2_VOB can be reproduced in units of the VOBU corresponding to the identical compressing and encoding method or in units of the PGC described later, by referring to the flag information.

The plurality of flag information for indicating the compressing and encoding methods has been explained above; however, at minimum, one type out of a plurality of types of the flag information may be recorded in order to reproduce it. Alternatively, a plurality of types of or all types of the flag information may be recorded in order to identify the compressing and encoding method quickly.

For example, if the VOB_VERN_FLG 308 is recorded in the VOBU_ADP_ID (refer to FIG. 12), the reference to the flag information enables the identification of the compressing and encoding method upon the reproduction, even when the VOBU is directly accessed without referring to the "VMG" 110 and the "VMG2" 120 in the upper layer (refer to FIG. 2 etc.), e.g., in application of directly reading the VOBU in a Personal Computer (PC) environment or the like. In this case, one DSI in the NV_PCK 41 is included in the VOBU, so that it can be used as an identifier.

Moreover, for example, if the VOB_VERN_FLG 302, 306, or 307 is recorded in the VMGM2_CPI (refer to FIG. 5), the VTSM2_CPI (refer to 10), or the VTS2_CPI (refer to FIG. 11), the reading of only the VMGMZ or VTSM2 in the upper layer of the VOBU enables the identification of the compressing and encoding method of the VOBU in the lower layer upon the reproduction. In this case, namely, the compressing and encoding method can be identified without directly reading the VOBU at each time. Especially in the case of recording the flag information in the VMGM2_CPI (refer to FIG. 5), the compressing and encoding method can be identified correspondingly to the VOB_IDN.

Furthermore, for example, if the VOB_VERN_FLG 303 is recorded in the "TT_SRPT2" 125 (refer to FIG. 6), the reference to the flag information for indicating the compressing and encoding method given to each Title enables the identification of the compressing and encoding method of the VOBU which is used for the Title upon the reproduction. If a rule is made in which a plurality of compressing and encoding methods are not mixed in the same Title, these flag information is effective.

Moreover, for example, if the VOB_VERN_FLG 301, 304, or 305 is recorded in the VMGM2_PGCI_SRP (refer to FIG. 4), the VTSM2_PGCI_SRP (refer to FIG. 8), or the VTS2_PGCI_SRP (refer to FIG. 9), the reference to the flag information for indicating the compressing and encoding method given to each PGC enables the identification of the compressing and encoding method of the VOBU which is used for the PGC upon the reproduction. If a rule is made in which a plurality of compressing and encoding methods are not mixed in the same PGC, these flag information is effective.

Next, a logical format (logical structure) of the optical disc 100 will be explained with the "PGC" and the "PGCI" with reference to FIG. 13. FIG. 13 is a schematic diagram showing a logical structure (logical format) in the optical disc related to the embodiment.

For convenience, the explanation will start from the lowest hierarchy in FIG. 13. One program 60 is logically constructed by selecting and combining a plurality of Cells 20 out of the above-described physical structure constructed from the Cells 20 (refer to FIG. 12). Incidentally, an author or producer can define one program 60 or a combination of a plurality of the programs 60 as the smallest unit that an audience can freely select and watch or listen to. This unit is referred to as Part of Title (PTT). One Program Chain (PGC) 61 is logically constructed by combining a plurality of programs 60. The above-described PGCI is defined with this PGC 61 unit. The PGCI includes: a reproduction order of the Cells 20 in each program 60 upon reproducing each program 60; an address of each Cell 20, which is a recording position on the optical disc 100; a head Cell number of a head Cell 20 to be reproduced in one program 60; and so on. One PGC 61 includes data, such as substantive video and audio, as a combination of the programs 60 (which is, in other words, a combination of the Cells 20) in addition to the above-described PGCI. One Title 62 is logically constructed by combining one or a plurality of PGC 61.

In this embodiment, one or a plurality of VTS#l (l=1, ..., n) 111 is logically constructed if the Title is based on MPEG 1 or 2, On the other hand, if the Title is based on MPEG 4, one or a plurality of VTS2#l (l=1, ..., m) 121 is logically constructed (refer to FIG. 2).

As explained in FIG. 1 to FIG. 13, when video data is reproduced, decoders are switched, as occasion demands, in units of the Title, PGCI, Cell, VOBU, or the like, by referring to the flag information (i.e. the VOB_VERN_FLGs 301 to 308) in the following timing: e.g., when the Title to be reproduced is specified, when the PGC to be reproduced is specified, when the Cell to be reproduced is specified, when the VOBU to be reproduced is specified, after the VOBU to be reproduced is accessed, or the like. This allows the reproduction of video data.

Therefore, the present invention enables an information reproducing apparatus, such as a DVD player, to divert the existing entity information (i.e. the VMGM_VOBS or VTSM_VOB) and to display and output a menu screen by referring to the flag information and by switching decoders as occasion demands. Alternatively, it enables the apparatus to select a Title including the information unit (e.g. the VOBU) compressed and encoded by different compressing and encoding methods for each information unit whose compressing and encoding method is common, and it enables the apparatus to appropriately reproduce the Title.

### (Embodiment of Information Reproducing Apparatus)

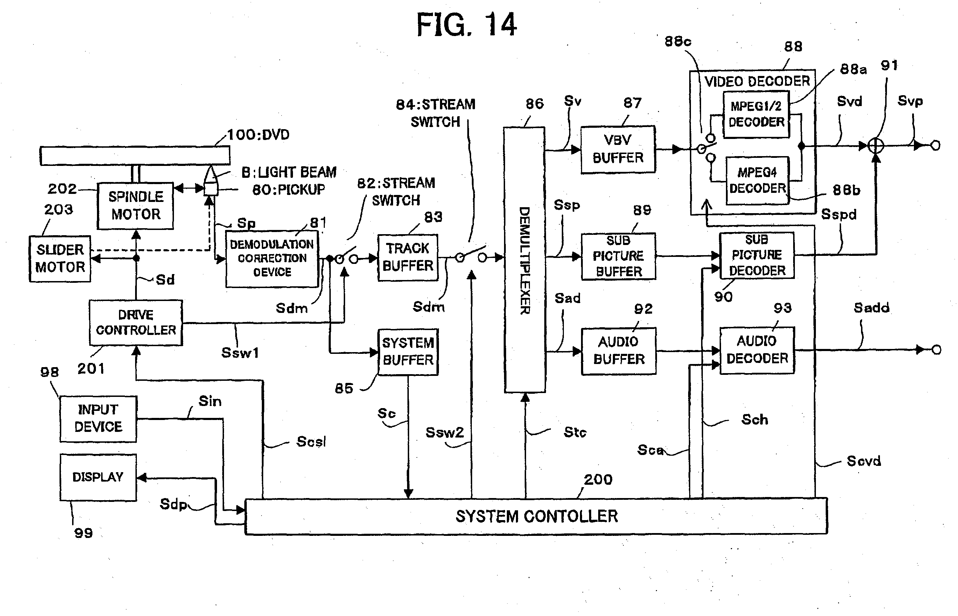

Next, an embodiment of an information reproducing apparatus of the present invention will be explained with reference to FIG. 14 to FIG. 17.

Firstly, the structure and operation of the information reproducing apparatus will be explained with reference to FIG. 14. FIG. 14 is a block diagram in the embodiment of the information reproducing apparatus. In this embodiment, the information reproducing apparatus is constructed as a DVD player.

In FIG. 14, the information reproducing apparatus is provided with: an optical pickup 80; a demodulation correction device 81; stream switches 82 and 84; a track buffer 83; a system buffer 85; a demultiplexer 86; a Video Buffer Verifier (VBV) buffer 87; a video decoder 88; a sub picture buffer 89; a sub picture decoder 90; a mixer 91; an audio buffer 92; an audio decoder 93; an input device 98; a display 99; a system controller 200; a drive controller 201; a spindle motor 202; and a slider motor 203.

In this embodiment, the video decoder 88 is particularly provided with: a MPEG 1/2 decoder 88a; a MPEG 4 decoder 88b; and a select switch 88c for selecting the input of a video signal Sc to the both decoders. The select switch 88c is select-controlled in response to a control signal Scvd generated and outputted by the system controller 200.

Incidentally, the structure shown in FIG. 14 is only a part regarding the reproduction of video and audio out of the structure of the information reproducing apparatus constructed as the video DVD player. A servo circuit or the like for servo-controlling the pickup 80, the spindle motor 202, the slider motor 203, or the like is the same as that in the related art, so that the description and detailed explanation thereof are omitted.

Next, the detailed structure of each constitutional element of the information reproducing apparatus in the embodiment and the basic operation thereof in the embodiment will be explained.

The pickup 80 includes a laser diode, a beam splitter, an object lens, a photodetector, and so on, which are not illustrated. The pickup 80 irradiates a light beam B as reproduction light onto the optical disc 100 and receives reflected light of the light beam B from the optical disc 100. Then, it outputs a detected signal Sp corresponding to the information pits formed on the optical disc 100. In this case, tracking servo control and focus servo control are performed by the same manner as that in the related art with respect to the not-illustrated object lens so that the light beam B is irradiated accurately onto information tracks on the optical disc 100 and that it is accurately focused on the information recording surface on the optical disc 100.

The detected signal Sp outputted from the pickup 80 is inputted to the demodulation correction device 81. Then, demodulation and error correction are performed to generate a demodulated signal Sdm. The demodulated signal Sdm is outputted to the stream switch 82 and the system buffer 85.

The stream switch 82 to which the demodulated signal Sdm is inputted is controlled regarding its opening and closing by a switch signal Ssw1 from the drive controller 201. In closing, the stream switch 82 lets the inputted demodulated signal Sdm go through as it is and outputs it to the track buffer 83. In contrast to this, in opening of the stream switch 82, it does not output the demodulated signal Sdm, so that unnecessary control information (signal) for decoding is not inputted to the track buffer 83.

The track buffer 83 to which the demodulated signal Sdm is inputted is constructed of a First In First Out (FIFO) memory or the like. The track buffer 83 memorizes the inputted demodulated signal Sdm temporarily, and it outputs the memorized demodulated signal Sdm continuously when the stream switch 84 is closed.

The stream switch 84 to which the demodulated signal Sdm is inputted continuously is controlled regarding its opening and closing by a switch signal Ssw2 from the system controller 200 so that various buffers described later do not overflow in separation processing at the demultiplexer 86, or adversely that they do not stop decoding because of its emptiness.

On the other hand, the system buffer 85 to which the demodulated signal Sdm is inputted, in addition to the track buffer 83, accumulates management information about whole of the information recorded on the optical disc 100 or the like (i.e. the VMG, the VMG2, or the like), which is firstly detected when the optical disc 100 is loaded. Then, it outputs the accumulated management information as control information Sc to the system controller 200. The system buffer 85 also accumulates the DSI data 51 for each Navi Pack 41 temporarily during reproduction and outputs it as control information Sc to the system controller 200.

The demultiplexer 86 to which the demodulated signal Sdm is inputted continuously through the stream switch 84 extracts the video data, the sub picture data, and the audio data for the relative Packs, and it extracts the PCI data for the Navi Pack. Then, the demultiplexer 86 outputs them as a video signal Sv, a sub picture signal Ssp, an audio signal Sad, and a PCI signal Spc to the VBV buffer 87, the sub picture buffer 89, the audio buffer 92, and the system controller 200, respectively.

The VBV buffer 87 to which the video signal Sv is inputted is constructed of the FIFO memory or the like. It accumulates the video signal Sv temporarily and outputs it to the video decoder 88. The VBV buffer 87 is intended to compensate variation in the amount of data for each video in the video signal Sc, which is compressed by e.g. the MPEG 2 method or the like. The video signal Sv in which the variation in the amount of data is compensated is inputted to the video decoder 88.

In this embodiment, particularly when the Title or menu screen based on MPEG 1 or 2 is reproduced, the select switch 88c is switched by the control signal Scvd under the control of the system controller 200 based on the above-described first, second, or third attribute information, and the MPEG 1/2 decoder 88a is used. Then, the decoding of the video signal Sv based on MPEG 1 or MPEG 2 is performed appropriately, and it is outputted as a decoded video signal Svd to the mixer 91. On the other hand, when the Title or menu screen based on MPEG 4 is reproduced, the select switch 88c is switched by the control signal Scvd under the control of the system controller 200 based on the above-described first, second, or third attribute information, and the MPEG 4 decoder 88b is used. Then, the decoding of the video signal Sv based on MPEG 4 is performed appropriately, and it is outputted as a decoded video signal Svd to the mixer 91.

In the meanwhile, the sub picture buffer 89 to which the sub picture signal Ssp is inputted accumulates the inputted sub picture signal Ssp temporarily and outputs it to the sub picture decoder 90. The sub picture buffer 89 is intended to synchronize the sub picture data in the Sub Picture Pack 44 included in the sub picture signal Ssp with the video data in the Video Pack 42 corresponding to the sub picture data and to output it. Then, the sub picture signal Ssp synchronized with the video data is inputted to the sub picture decoder 90. Here, decoding is performed on the basis of a control signal Sch outputted from the system controller 200, and it is outputted as a decoded sub picture signal Sspd to the mixer 91.

The decoded video signal Svd outputted from the video decoder 88 and the decoded sub picture signal Sspd outputted from the sub picture decoder 90 (which is synchronized with the corresponding decoded video signal Svd) are mixed by the mixer 91. The mixed signal is outputted to a display device, such as a Cathode Ray Tube (CRT), a Liquid Crystal Display (LCD), and a Plasma Display (PDP), as a final video signal Svp to be displayed.

The audio buffer 92 to which the audio signal Sad is inputted is constructed of the FIFO memory or the like. The audio buffer 92 accumulates the inputted audio signal Sad temporarily and outputs it to the audio decoder 93. The audio buffer 92 is intended to synchronize the audio signal Sad with the video signal Sv or sub picture signal Ssp including corresponding video information and to output it. The audio buffer 92 delays the audio signal Sad depending on an output state of the corresponding video information. The audio signal Sad, which is time-adjusted so as to synchronize it with the corresponding video information, is outputted to the audio decoder 93. Then, it is reproduced in a linear Pulse Code Modulation (PCM) method on the basis of a control signal Sca outputted from the system controller 200. Then, it is outputted to a not-illustrated speaker or the like, as a demodulated audio signal Sadd.

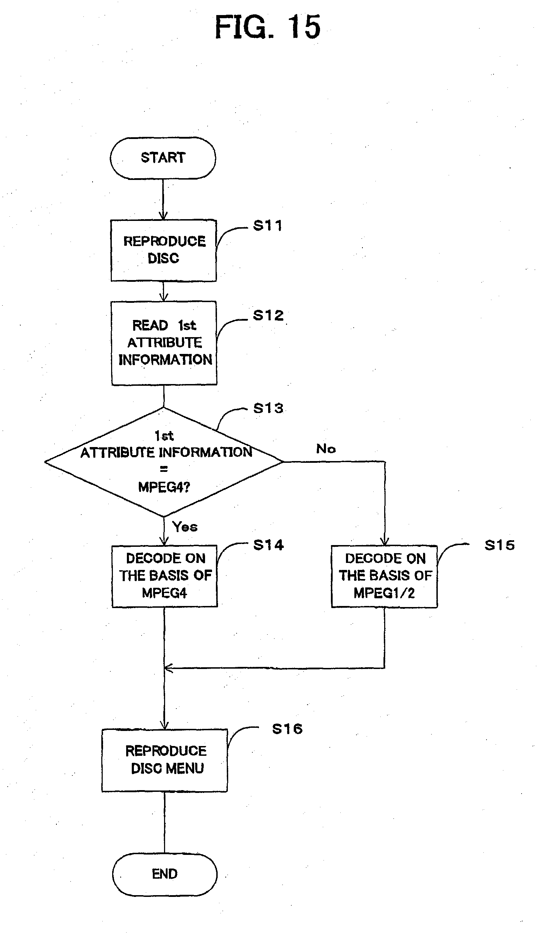

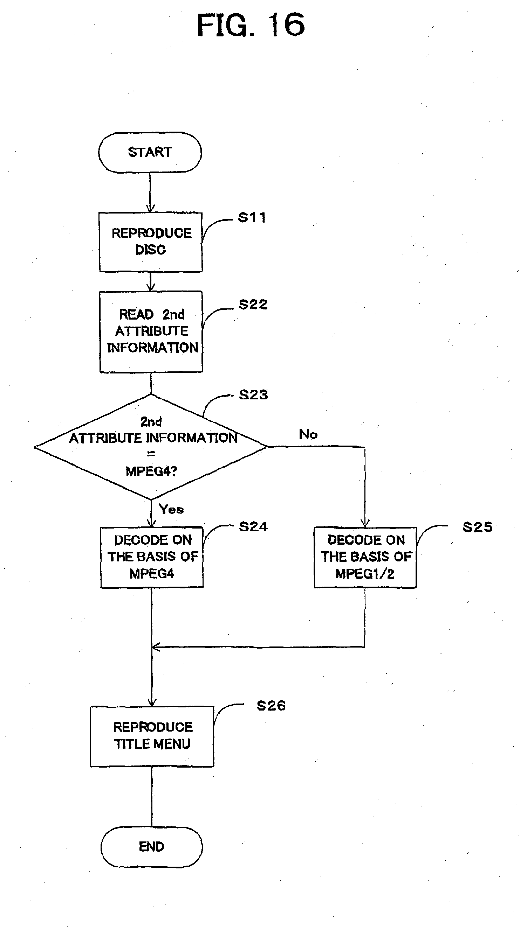

Next, a reproduction sub routine, e.g., in reproducing the optical disc 100 by switching the decoders on the basis of the first, second, or third attribute information will be explained with reference to FIG. 15 to FIG. 17. FIG. 15 is a flowchart showing a reproduction operation of reproducing by switching the decoders on the basis of the first attribute information. FIG. 16 is a flowchart showing a reproduction operation of reproducing by switching the decoders on the basis of the second attribute information. FIG. 17 is a flowchart showing a reproduction operation of reproducing Titles by switching the decoders on the basis of the third attribute information.

### (1) Reproduction Operation of Disc Menu:

The reproduction operation of a disc menu based on the first attribute information will be explained with reference to FIG. 15.

In this embodiment, the first attribute information is recorded in the "VMG2" 120 (refer to FIG. 2 and FIG. 3) as the "VOB_VERN_FIG" 301 (refer to FIG. 4) or the "VOB_VERN_FLG" 302 (refer to FIG. 5), both of which are 1-bit flag information. The first attribute information indicates the compressing and encoding method of the VMGM2_VOBS (refer to FIG. 3) as being one example of the entity information for the first menu.

Incidentally, the reproduction control processing described below is performed mostly by the system controller 200 (refer to FIG. 14) which functions in accordance with a computer program for controlling reproduction loaded from a recording medium or downloaded through a communication line out of the information reproducing apparatus.

As shown in FIG. 15, the optical disc 100 is set by a user in the information reproducing apparatus (refer to FIG. 14), for example, and the reproduction processing of the disc 100 is started (step S11). The reproduction processing of the disc menu is started as preprocessing by inputting a reproduction start command or the like, or without waiting the input of the reproduction start command.

Incidentally, such disc menu reproduction processing may be performed when a predetermined condition is satisfied as a sub-routine in a control program for reproducing actual contents, or it may be performed regularly or irregularly. Alternatively, it may be selectively performed according to a menu display command or the like.

Firstly, the "VMG2" 120 (refer to FIG. 3) recorded on the optical disc 100 is read (step S12). At that time, the first attribute information recorded as the "VOB_VERN_FLG" 301 (refer to FIG. 4) or the "VOB_VERN_ FLG" 302 (refer to FIG. 5) is read, and it is judged whether or not the compressing and encoding method of the VMGM2_VOBS is MPEG 4 (step S13). For example, when the first attribute information indicates the compressing and encoding method based on MPEG 4 (the step S13: Yes), the select switch 88c is switched by the control signal Scvd to the side of the MPEG 4 decoder 88b under the control of the system controller 200 (refer to FIG. 14). Then, the VMGM2_VOBS is decoded by the MPEG 4 decoder 88b (step S14), and the menu screen is displayed and outputted (step S16).

On the other hand, in the judgment in the step S13, when the first attribute information indicates the compressing and encoding method based on MPEG 1 or 2 (the step S13: No), the select switch 88c is switched by the control signal Scvd to the side of the MPEG 1/2 decoder 88a under the control of the system controller 200 (refer to FIG. 14). Then, the VMGM2_VOBS is decoded by the MPEG 1/2 decoder 88a (step S15), and the menu screen is displayed and outputted (the step S16). Incidentally, during the display and output of the menu screen, the system controller 200 may always confirm whether the "VOB_VERN_FLG" 308 included in the NV_PCK 41 of the VMGM2_VOBS corresponds to the previously read "VOB_VERN_FLG" 301 (refer to FIG 4) or "VOB_VERN_FLG" 302 (refer to FIG. 5). If they are different, the system controller 200 may control the select switch 88c in accordance with the "VOB_VERN_FLG" 308.

### (2) Reproduction Operation of Title Menu:

The reproduction operation of a Title menu based on the second attribute information will be explained with reference to FIG. 16.

In this embodiment, the second attribute information is recorded in the "VTS2" 121 (refer to FIG. 2 and FIG. 7) as the "VOB_VERN_FLG" 304 (refer to FIG. 8) or the "VOB_VERN_FLG" 306 (refer to FIG. 10), both of which are 1-bit flag information. The second attribute information indicates the compressing and encoding method of the VTSM2_VOBS (refer to FIG. 7) as being one example of the entity information for the second menu.

Incidentally, the reproduction control processing described below is performed mostly by the system controller 200 (refer to FIG. 14) which functions in accordance with a computer program for reproduction control loaded from a recording medium or downloaded through a communication line out of the information reproducing apparatus.

As shown in FIG. 16, the optical disc 100 is set by a user in the information reproducing apparatus (refer to FIG. 14), for example, and the reproduction processing of the disc 100 is started (the step S11).

Firstly, the "VTS2" 121 (refer to FIG. 7) recorded on the optical disc 100 is read (step S22). At that time, the second attribute information recorded as the "VOB_VERN_FZG" 304 (refer to FIG. 8) or the "VOB_VERN_FLG" 306 (refer to FIG. 10) is read, and it is judged whether or not the compressing and encoding method of the VTSM2_VOB is MPEG 4 (step S23). For example, when the second attribute information indicates the compressing and encoding method based on MPEG 4 (the step S23: Yes), the select switch 88c is switched by the control signal Scvd to the side of the MPEG 4 decoder 88b under the control of the system controller 200 (refer to FIG. 14). Then, the VTSM2_VOB is decoded by the MPEG 4 decoder 88b (step S24), and the menu screen is displayed and outputted (step S26).

On the other hand, in the judgment in the step S23, when the second attribute information indicates the compressing and encoding method based on MPEG 1 or 2 (the step S23: No), the select switch 88c is switched by the control signal Scvd to the side of the MPEG 1/2 decoder 88a under the control of the system controller 200 (refer to FIG. 14). Then, the VTSM2_VOB is decoded by the MPEG 1/2 decoder 88a (step S25), and the menu screen is displayed and outputted (the step S26). Incidentally, during the display and output of the menu screen, the system controller 200 may always confirm whether the "VOB_VERN_FLG" 308 (refer to FIG. 12) included in the NV_PCK 41 of the VTSM2_VOB corresponds to the previously read "VOB_VERN_FLG" 304 (refer to FIG 8) or "VOB_VERN_FLG" 306 (refer to FIG. 10). If they are different, the system controller 200 may control the select switch 88c in accordance with the "VOB_VERN_FLG" 308.

### (3) Reproduction of Title Including Processing Units Compressed and Encoded by Different Compressing and Encoding Method;

The reproduction operation of a Title menu based on the second attribute information will be explained with reference to FIG. 17.

In this embodiment, the third attribute information is recorded in each "VOBU" (refer to FIG, 12) as the "VOB_VERN_FLG" 308 (refer to FIG. 12), which is 1-bit flag information. The third attribute information indicates the compressing and encoding method of the VOBU constituting the VTS2_VOB (refer to FIG. 7) as being one example of the second entity information.

The compressing and encoding method does not have to be changed in units of the VOBU, but it may be changed in units of a larger information unit, such as the Cell, VOB, PGC, Title, or the like. Alternatively, it maybe changed in units of a smaller information unit, such as the Pack. If the changeable information unit is previously set on a rule, it is possible to identify the compressing and encoding method upon the reproduction by recording the third attribute information by at least one point with respect to the known changeable information unit. The third attribute information may be recorded redundantly to some extent, which is sometimes desirable from the viewpoint of simplifying the reproduction processing. In this embodiment, the third attribute information is recorded in each VOBU as shown in FIG. 12, and on the basis of this, the reproduction control as described below is performed.

In this embodiment, as described below, the third attribute information recorded in each VOBU is referred in real-time, and the reproduction is performed while identifying the compressing and encoding method of each VOBU. It is also possible to identify the compressing and encoding method of each VOBU before the reproduction of each VOBU by recording the third attribute information for indicating the compressing and encoding method for each VOBU in an area except the VOBU, e.g., in the "VMG2" 120 (refer to FIG. 2 and FIG. 3) as the "VOB_VERN_FLG" 303 (refer to FIG. 6) which is 1-bit flag infoarmtion, or in the "VTS2" 121 (refer to FIG. 2 and FIG. 7) as the "VOB_VERN_FLG" 305 (refer to FIG. 9) or the "VOB_VERN_FLG" 307 (refer to FIG. 11).

Incidentally, the reproduction control processing described below is performed mostly by the system controller 200 (refer to FIG. 14) which functions in accordance with a computer program for reproduction control loaded from a recording medium or downloaded through a communication line out of the information reproducing apparatus.

As shown in FIG. 17, the optical disc 100 is set by a user in the information reproducing apparatus (refer to FIG. 14), for example. Then, predetermined processing according to the display of a menu, such as selection of Title (refer to FIG. 15 and FIG. 16), is performed. Then, the reproduction processing is started in units of the VOB or Cell constituting the Title as being a reproduction object (step S31).

Firstly, the VOBU packed and recorded is read (step S32). At that time, the third attribute information recorded as the "VOB_VERN_FLG" 308 (refer to FIG. 12) is read, and it is judged whether or not the compressing and encoding method of the VTSM2_VOB is MPEG 4 (step S33). For example, when the third attribute information indicates the compressing and encoding method based on MPEG 4 (the step S33: Yes), the select switch 88c is switched by the control signal Scvd to the side of the MPEG 4 decoder 88b under the control of the system controller 200 (refer to FIG. 14). Then, the corresponding VOBU is decoded by the MPEG 4 decoder 88b (step S34), and video contents to be reproduced is displayed and outputted by reproducing the VOBU (step S36).

On the other hand, in the judgment in the step S33, when the third attribute information indicates the compressing and encoding method based on MPEG 1 or 2 (the step S33: No), the select switch 88c is switched by the control signal Scvd to the side of the MPEG 1/2 decoder 88a under the control of the system controller 200 (refer to FIG. 14). Then, the corresponding VOBU is decoded by the MPEG 1/2 decoder 88a (step S35), and video contents to be reproduced is displayed and outputted by reproducing the VOBU (the step S36).

Then, it is judged whether or not there is a next VOBU to be reproduced in order to continuously display and output the video contents to be reproduced (step S37). It there is (the step S37: Yes), the operational flow returns to the step S32 and the processing after the reading of the VOBU is repeatedly performed. The VOBU reproduction in the step S36 allows the continuous display and output of the video contents as moving pictures or still pictures.

On the other hand, if there is not a next VOBU as a result of the judgment in the step S37 (the step S37: No), it is judged whether or not the reproduction of the VOB or Cell (refer to FIG. 13) constituting the Title to be reproduced is all ended (step S38). If it is not ended (the step S38: No), the operational flow returns to the step S31, and the processing after the reading of the VOB or Cell is repeatedly performed. The display and output of the Title to be reproduced is continued.

On the other hand, if the reproduction of the VOB or Cell (refer to FIG. 13) constituting the Title to be reproduced is all ended (the step S38: Yes), a series of the reproduction operation is ended.

In the step S32 to the S37, the processing in which the VOBU is read one by one and reproduced is shown in time-series order for the convenience of explanation. In practice, however, by reading a plurality of VOBU into the buffer at one time or the like, it is possible to perform the judgment by the third attribute information at one time for the plurality of VOBU. Moreover, as described above, it is also possible to perform the judgment processing by the third attribute information as in the step S33 for each information unit in which the compressing and encoding method is possibly switched, by previously making a rule about the information unit in which the compressing and encoding method is switched.

In addition, the embodiment can be constructed so as to continuously extract only the VOBU having the same compressing and encoding method in real-time (i.e. so as to destroy the VOBU having the compressing and encoding method not to be reproduced) by referring to the "VOB_VERN_FLG" 308 (refer to FIG. 12), which indicates the compressing and encoding method of each VOBU, upon reproducing each VOBU. Moreover, it can be constructed so as to display and output the video contents as moving pictures or still pictures from the plurality of VOBU extracted during the above extraction.

As explained in detail above, according to the optical disc 100 in the embodiment, when the information reproducing apparatus of the present invention (refer to FIG. 14) reproduces and outputs the entity information about the disc menu, the Title menu, or the Title (e.g. video data), it can switch the decoders as occasion demands by referring to the flag information constituting one example of the first, second, or third attribute information. Therefore, in the optical disc 100 including Titles based on MPEG 4, such as the above-described VTS2, it is possible to divert the existing menu information based on MPEG 1 or 2 (i.e. the VMGM_VOBS or the VTSM_VOB) to the entity information of the disc menu stored in the above-described "VMG2" 120 (i.e. the VMGM2_VOBS) or to the entity information of the Title menu stored in the above-described "VTS2" 121 (i.e. the VTSM2_VOB). Namely, even in the optical disc 100 including the "VMG2" 120 and the "VTS2" 121 newly made in accordance with MPEG 4, it is not necessary to newly make the VMGM2_VOBS or the VTSM2_VOB in accordance with MPEG 4. This is extremely useful in practice for contents makers.

Incidentally, in the above-described embodiment, the optical disc 100 is explained as one example of the information recording medium, and a player related to the optical disc 100 is explained as the one example of the information reproducing apparatus. The present invention, however, is not limited to the optical disc 100 and the player. It can be applied to various information recording media for high-density recording or high transfer rate, and to the player for the media.

## Claims

1. An information recording medium (100) **characterized in that**, on said information recording medium, there are recorded:
one or a plurality of first entity information (VTS_VOB), which is compressed and encoded by a first compressing and encoding method, for individually constituting Titles, each of which is a logical combination of contents including at least video;
first management information (VMG) for managing and controlling said first entity information;
one or a plurality of second entity information (VTS2_VOB), which is compressed and encoded by a second compressing and encoding method, which is different from the first compressing and encoding method, for individually constituting Titles, each of which is a logical combination of contents same as or different from the contents of said first entity information;
second management information (VMG2) for managing and controlling said first and second entity information;
entity information for a first menu (VMGM2_VOBS), which is compressed and encoded by the first or second compressing and encoding method, for constituting the first menu related to said first and second entity information; and
first attribute information (VOB_VERN_FLG) for indicating the first or second compressing and encoding method of compressing and encoding said entity information for the first menu.

2. The information recording medium (100) according to claim 1, **characterized in that**
the first compressing and encoding method has lower compressibility than that of the second compressing and encoding method, and
said entity information for the first menu (VMGM2_VOBS) is compressed and encoded by the first compressing and encoding method.

3. An information recording medium (100) **characterized in that**, on said information recording medium, there are recorded:
one or a plurality of second entity information (VTS2_VOB), which is compressed and encoded by a second compressing and encoding method, which is different from a first compressing and encoding method, for individually constituting Titles, each of which is a logical combination of contents same as or different from the contents of a first entity information (VTS_VOB), in addition to or in place of one or a plurality of said first entity information, which is compressed and encoded by the first compressing and encoding method, for individually constituting Titles, each of which is a logical combination of contents including at least video;
second management information (VMG2) for managing and controlling at least said second entity information out of said first and second entity information, in addition to or in place of first management information (VMG) for managing and controlling said first entity information;
entity information for a first menu (VMGM2_VOBS), which is compressed and encoded by the first compressing and encoding method, for constituting the first menu related to at least said second entity information out of said first and second entity information; and
first attribute information (VOB_VERN_FLG) for indicating the first compressing and encoding method as a compressing and encoding method of compressing and encoding said entity information for the first menu,
wherein
the first compressing and encoding method has lower compressibility than that of the second compressing and encoding method.

4. The information recording medium (100) according to any one of claims 1 to 3, **characterized in that**
said second management information (VMG2) has first entire logical information about whole of said second management information, and
said first attribute information (VOB_VERN_FLG) comprises n-bit flag information (n: natural number, n ≧ 1) recorded in management information (VMGM2_PGCI_SRP) for accessing Program Chain Information which defines a Program Chain which is a logical division made by combining a plurality of Cells constituting said entity information for the first menu, the management information being included in said first entire logical information,.

5. The information recording medium (100) according to any one of claims 1 to 3, **characterized in that**
said second management information (VMG2) has first entire logical information about whole of said second management information, and
said first attribute information (VOB_VERN_FLG) comprises n-bit flag information (n: natural number, n≧1) recorded in one or a plurality of Cell information (VMGM2_CPI) about a plurality of Cells constituting said entity information for the first menu, the Cell information being included in said first entire logical information,.

6. The information recording medium (100) according to any one of claims 1 to 5, **characterized in that**, on said information recording medium, there are recorded:
entity information for a second menu (VTSM2_VOB), which is compressed and encoded by the first or second compressing and encoding method, for constituting the second menu related to said second entity information (VTS2_VOB); and
second attribute information (VOB_VERN_FLG) for indicating the first or second compressing and encoding method of compressing and encoding said entity information for the second menu.

7. The information recording medium (100) according to claim 6, **characterized in that**
said second entity information (VTS2_VOB) has second entire logical information about whole of said second entity information, and
said second attribute information (VOB_VERN_FLG) comprises n-bit flag information (n: natural number, n≧1) recorded in management information for accessing Program Chain Information which defines a Program Chain which is a logical division made by combining a plurality of Cells constituting said entity information for the second menu, the management information being included in said second entire logical information.

8. The information recording medium (100) according to claim 6, **characterized in that**
said second entity information (VTS2_VOB) has second entire logical information about whole of said second entity information, and
said second attribute information (VOB_VERN_FLG) comprises n-bit flag information (n: natural number, n ≧ 1) recorded in one or a plurality of Cell information about a plurality of Cells constituting said entity information for the second menu, the Cell information being included in said second entire logical information.

9. An information recording medium (100) **characterized in that**, on said information recording medium, there are recorded:
one or a plurality of first entity information (VTS_VOB), which is compressed and encoded by a first compressing and encoding method, for individually constituting Titles, each of which is a logical combination of contents including at least video;
first management information (VMG) for managing and controlling said first entity information;
one or a plurality of second entity information (VTS2_VOB), in which (i) a first portion comprising one or a plurality of unit information compressed and encoded by a second compressing and encoding method different from the first compressing and encoding method and (ii) a second portion comprising one or a plurality of unit information compressed and encoded by the first compressing and encoding method are mixed, for individually constituting Titles, each of which is a logical combination of contents same as or different from the contents of said first entity information;
second management information (VMG2) for managing and controlling said first and second entity information;
entity information for a first menu (VMGM2_VOBS), which is compressed and encoded by the first or second compressing and encoding method, for constituting a first menu related to said first and second entity information;
first attribute information (VOB_VERN_FLG) for indicating the first or second compressing and encoding method of compressing and encoding said entity information for the first menu; and
third attribute information (VOB_VERN_FLG) for indicating the first or second compressing and encoding method of compressing and encoding said second entity information for each of the first and second portions.

10. The information recording medium (100) according to claim 9, **characterized in that**
said second entity information (VTS2_VOB) has second entire logical information about whole of said second entity information, and
said third attribute information (VOB_VERN_FLG) comprises n-bit flag information (n: natural number, n ≧ 1) recorded in management information for accessing Program Chain Information which defines a Program Chain which is a logical division made by combining a plurality of Cells constituting said second entity information, the management information being included in said second entire logical information.

11. The information recording medium (100) according to claim 9, **characterized in that**
said second entity information (VTS2_VOB) has second entire logical information about whole of said second entity information, and
said third attribute information (VOB_VERN_FLG) comprises n-bit flag information (n: natural number, n≧ 1) recorded in one or a plurality of Cell information about a plurality of Cells constituting said second entity information, the Cell information being included in said second entire logical information.

12. The information recording medium (100) according to claim 9, **characterized in that**
said second management information (VMG2) has first entire logical information about whole of said second management information, and
said third attribute information (VOB_VERN_FLG) comprises n-bit flag information (n: natural number, n ≧1) recorded in a management information table for accessing each of the Titles managed by said second management information, the management information table being included in said first entire logical information.

13. The information recording medium (100) according to any one of claims 1 to 12, **characterized in that** at least one of said first, second, and third attribute information (VOB_VERN_FLG) comprises n-bit flag information (n: natural number, n≧ 1) recorded in an empty area in the recording area of said entity information for the first menu, said entity information for the second menu, or said second entity information (VTS2_VOB), respectively.

14. The information recording medium (100) according to claim 13, **characterized in that**
said entity information for the first menu, said entity information for the second menu, or said second entity information (VTS2_VOB) is packed to be an physically accessible information unit and has a Navi Pack made by packing navigation information for reproducing and controlling the packed information unit, and
at least one of said first, second, and third attribute information (VOB_VERN_FLG) comprises n-bit flag information (n: natural number, n ≧ 1) recorded in control information for data searching, which is placed in the Navi Pack.

15. An information reproducing apparatus for reproducing the information recording medium (100) according to anyone of claims 1 to 8, **characterized in that** said apparatus comprises:
a reading device (80) for reading out information from the information recording medium;
a judgment device (200) for judging whether said entity information for the first menu is compressed and encoded by the first compressing and encoding method or by the second compressing and encoding method, on the basis of said first attribute information (VOB_VERN_FLG) out of the read information; and
a decoding device (88) (i) for decoding said entity information for the first menu by the first compressing and encoding method if it is judged by said judgment device that said entity information for the first menu is compressed and encoded by the first compressing and encoding method and (ii) for decoding said entity information for the first menu by the second compressing and encoding method if it is judged by said judgment device that said entity information for the first menu is compressed and encoded by the second compressing and encoding method.

16. An information reproducing apparatus for reproducing the information recording medium (100) according to any one of claims 9 to 12, **characterized in that** said apparatus comprises:
a reading device (80) for reading out information from the information recording medium;
a first judgment device (200) for judging whether said entity information for the first menu is compressed and encoded by the first compressing and encoding method or by the second compressing and encoding method, on the basis of said first attribute information (VOB_VERN_FLG) out of the read information;
a second judgment device (200) for judging whether said second entity information (VTS2_VOB) is the first portion compressed and encoded by the second compressing and encoding method or the second portion compressed and encoded by the first compressing and encoding method, on the basis of said third attribute information out of the read information; and
a decoding device (88) (i) for decoding said entity information for the first menu by the first compressing and encoding method if it is judged by said first judgment device that said entity information for the first menu is compressed and encoded by the first compressing and encoding method, (ii) for decoding said entity information for the first menu by the second compressing and encoding method if it is judged by said first judgment device that said entity information for the first menu is compressed and encoded by the second compressing and encoding method, (iii) for decoding the first portion by the second compressing and encoding method if it is judged by said second judgment device that said second entity information is the first portion compressed and encoded by the second compressing and encoding method, and (iv) for decoding the second portion by the first compressing and encoding method if it is judged by said second judgment device that said second entity information is the second portion compressed and encoded by the first compressing and encoding method.

17. The information reproducing apparatus according to claim 15 or 16, **characterized in that** said decoding device (88) includes a first decoder corresponding to the first compressing and encoding method and a second decoder corresponding to the second compressing and encoding method.

18. An information reproducing method of reproducing the information recording medium (100) according to any one of claims 1 to 8, **characterized in that** said method comprises:
a reading process of reading out information from the information recording medium;
a judgment process of judging whether said entity information for the first menu is compressed and encoded by the first compressing and encoding method or by the second compressing and encoding method, on the basis of the information read by said reading process; and
a decoding process (i) of decoding said entity information for the first menu by the first compressing and encoding method if it is judged by said judgment process that said entity information for the first menu is compressed and encoded by the first compressing and encoding method and (ii) of decoding said entity information for the first menu by the second compressing and encoding method if it is judged by said judgment process that said entity information for the first menu is compressed and encoded by the second compressing and encoding method.

19. An information reproducing method of reproducing the information recording medium (100) according to any one of claims 9 to 12, **characterized in that** said method comprises:
a reading process of reading out information from the information recording medium;
a first judgment process of judging whether said entity information for the first menu is compressed and encoded by the first compressing and encoding method or by the second compressing and encoding method, on the basis of the information read by said reading process;
a first decoding process (i) of decoding said entity information for the first menu by the first compressing and encoding method if it is judged by said first judgment process that said entity information for the first menu is compressed and encoded by the first compressing and encoding method and (ii) of decoding said entity information for the first menu by the second compressing and encoding method if it is judged by said first judgment process that said entity information for the first menu is compressed and encoded by the second compressing and encoding method;
a second judgment process of judging whether said second entity information (VTS2_VOB) is the first portion compressed and encoded by the second compressing and encoding method or the second portion compressed and encoded by the first compressing and encoding method, on the basis of said third attribute information (VOB_VERN_FLG) out of the read information; and
a second decoding process (iii) of decoding the first portion by the second compressing and encoding method if it is judged by said second judgment process that said second entity information is the first portion compressed and encoded by the second compressing and encoding method and (iv) of decoding the second portion by the first compressing and encoding method if it is judged by said second judgment process that said second entity information is the second portion compressed and encoded by the first compressing and encoding method.

20. A computer program **characterized in that** said computer program tangibly embodies a program of instructions executable by a computer to make the computer function as the information reproducing apparatus according to any one of claims 15 to 17.
